(19) Europäisches Patentamt
European Patent Office
Office européen des brevets

(11) **EP 4 457 130 B1**

(12) **EUROPEAN PATENT SPECIFICATION**

(45) Date of publication and mention
of the grant of the patent:
**01.07.2026 Bulletin 2026/27**

(21) Application number: **21847513.5**

(22) Date of filing: **28.12.2021**

(51) International Patent Classification (IPC):
*B62D 15/02* (2006.01)    *B60W 30/06* (2006.01)
*B62D 13/06* (2006.01)

(52) Cooperative Patent Classification (CPC):
**B62D 13/06; B60W 30/06; B62D 15/0285;**
B60W 2520/06; B60W 2556/10

(86) International application number:
**PCT/EP2021/087708**

(87) International publication number:
**WO 2023/126049 (06.07.2023 Gazette 2023/27)**

(54) **A METHOD FOR CONTROLLING A MANOEUVRE OF A VEHICLE**

VERFAHREN ZUR STEUERUNG EINES MANÖVERS EINES FAHRZEUGS

PROCÉDÉ DE COMMANDE D'UNE MANOUVRE D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.11.2024 Bulletin 2024/45**

(73) Proprietor: **Volvo Truck Corporation**
**40508 Göteborg (SE)**

(72) Inventors:
• **WIBERG, Wilhelm**
**436 39 ASKIM (SE)**
• **LJUNGQVIST, Oskar**
**511 99 SÄTILA (SE)**

(74) Representative: **Kransell & Wennborg KB**
**P.O. Box 2096**
**403 12 Göteborg (SE)**

(56) References cited:
**WO-A1-2017/036526    WO-A1-2020/018527**
**WO-A1-2020/021126    US-B1- 9 969 386**

# EP 4 457 130 B1

## Description

### TECHNICAL FIELD

The present disclosure relates to methods and control units for ensuring safe and efficient vehicle motion management of a vehicle, such as a heavy-duty vehicle. In particular, the present disclosure relates to a method for controlling a vehicle in preparation for a manoeuvre along a first main route direction. The methods are particularly suitable for reversing an articulated vehicle combination comprising at least two vehicle units interconnected via at least one articulated joint. However, the methods may also be suitable for forward manoeuvre of an articulated vehicle combination. In addition, the methods may also be suitable for a manoeuvre of a vehicle in in the form of a single vehicle unit.

The methods are particularly suitable for autonomous vehicles, such as autonomous trucks and trailers. The disclosure can, however, also be applied in other types of heavy-duty vehicles, e.g., in construction equipment and mining vehicles. The method may be suitable for vehicle combinations comprising a plurality of vehicle units as well as for a single vehicle unit.

### BACKGROUND

Heavy-duty vehicles, such as trucks and semi-trailer vehicles, are designed to carry heavy loads. In an attempt to meet this demand, the operational capacity of heavy-duty vehicles can be increased by e.g. vehicle combinations with a plurality of vehicle units in the form of trailer units. As such, the vehicle combination is able to transport a substantial amount of material when driving from one position to another. These types of vehicles must be able to start from standstill also in uphill conditions, accelerate on various types of road surfaces, and further be able to reverse in areas with reduced space. It may also be important that the vehicle can be operated in an efficient manner without unnecessary component wear.

By way of example, it has been observed that driving articulated vehicle combinations in reverse may present difficulties for drivers of such vehicle combinations. For example, where a driver has controlled the vehicle combination so as to turn from a road into an area with restricted areas for the vehicle combination to be manoeuvred until its final destination.

According to its Abstract, WO 2017/036526 A1 discloses one example of a device for reversing an articulated vehicle combination comprising at least two vehicle units interconnected via at least one articulated joint.

Moreover, in the field of heavy-duty vehicles there is an increasing demand for providing more efficient transportation vehicle systems, that may also be fully, or at least partly, autonomous. By way of example, autonomous vehicles, AVs, in confined areas typically perform a transport mission travelling along a main route from a first point to a second point with goods repetitively. The transport mission could be to load goods in one end, the first point, and unload the goods in the other end, the second point. To perform the transport mission, the vehicle, or vehicle combination, may often need to be reversed into a position in order for the goods to be unloaded or loaded. Hence, when the vehicle, or vehicle combination arrives at the second point, the vehicle may be controlled to raise the bucket to unload gravel/rocks over an edge, reverse into position to have a straddle carrier unload a container that the vehicle carries or reverse into a loading bay to unload/load goods into the vehicle. The position where the goods should be loaded/unloaded is often well defined and with tight margins, e.g. the crusher where the rocks shall be tipped into is at a specific location, the loading bay doors are at a specific location, the straddle carrier only drives over a specific position etc.

According to its Abstract, WO 2020/021126 A1 discloses an example of a method for steering a vehicle along a path in a driveway and around obstacles between a starting position into a target position.

In view of the aforesaid, there is a continuing need for further improvements in vehicle motion management in heavy-duty vehicles. In particular, there is an additional desire for improved systems and methods of controlling a manoeuvre of a vehicle along a route with limited space to side borders.

### SUMMARY

It is an object of the present disclosure to provide techniques which alleviate or overcome at least some of the above-mentioned problems and to provide an improved method for controlling a manoeuvre of a vehicle. This object is achieved by a method according to claim 1. The objective is also achieved by the other independent claims. The dependent claims are directed to advantageous embodiments of the disclosure.

According to a first aspect, there is provided a method for controlling a vehicle in preparation for a manoeuvre along a first main route direction, said method comprising: obtaining a set of entry conditions indicating allowable vehicle states prior to commencing the manoeuvre, determining a current vehicle state, and initiating the manoeuvre if the current vehicle state is comprised in the set of entry conditions.

Hereby, it becomes possible to provide an improved vehicle motion management system where the manoeuvring of vehicle can be prepared and controlled along a main route, and typically adjusted during the manoeuvring, in order to increase the probability of arriving at the desired target location in an efficient manner. While the proposed method may be useful both for a forward manoeuvring and a reverse manoeuvring, the method may be particularly useful for reversing a vehicle combination including two or more vehicle units of a heavy-duty vehicle along a route with limited space. A limited space generally allows little room for manoeuvre of the vehicle combination.

This is at least partly due to the provisions of determining a set of entry conditions indicating allowable vehicle states prior to commencing the manoeuvre and initiating the manoeuvre if the current vehicle state is comprised in the set of entry conditions. In this manner, as will be further described herein, the method provides for improving the efficiency of reversing with a heavy-duty vehicle combination by estimating and favourably performing a retake before the vehicle combination has reached the boundaries. The proposed method may also contribute to ensure that the retake is enough in terms of distance and direction so as to permit the vehicle combination to reach the target pose when reiterating the reversing operation of the vehicle combination. The proposed method may also contribute to ensure that the retake can be performed well before reaching the boundaries if the vehicle leaves or deviates from the valid set of entry conditions.

Accordingly, the proposed method provides for an improved motion control of vehicle, e.g. an autonomous heavy-duty vehicle combination in narrow target environments such as parking lots or reversing to container undocking areas. The proposed method aims at providing an improved method for ensuring that an entry condition is fulfilled before a reversing operation can be initiated. In this manner, it becomes possible to avoid undesired forward/ rearward movements to realign the vehicle during the reversing operation. The proposed method may be implemented in a control system of an autonomous vehicle combination so as to at least partly overcome any problems relating to reversing of autonomous vehicle combinations in environments with limited space.

The method may be implemented and executed to support the control of the vehicle during the preparation of a manoeuvre as well as during the actual manoeuvre of the vehicle along the route. Hence, by way of example, the method may initially be used in the preparation for reversing and during the reversing operation of the vehicle. Accordingly, the method may facilitate in positioning the vehicle within the known entry states to ensure that vehicle can reach the end pose. In addition, or alternatively, the method may facilitate the positioning of the vehicle during the manoeuvre by continuously monitoring the vehicle along the route so that the vehicle can still reach the end pose, otherwise another manoeuvre is performed.

By way of example, the provision of obtaining a set of entry conditions indicating allowable vehicle states prior to commencing the manoeuvre may comprise obtaining a vehicle model of the vehicle.

The vehicle model may contain data indicative of the vehicle geometry of the vehicle. The vehicle geometry of the vehicle generally refers to any one of the outer shapes of the vehicle, axle placement of the wheel axles and any articulation points of the vehicle. By way of example, the vehicle geometry data may be useful in order to gain knowledge of the extension and movement of the vehicle, including e.g. a swept path of the vehicle, a number and position of any steerable axles of the vehicle etc.

By way of example, the provision of obtaining a set of entry conditions indicating allowable vehicle states prior to commencing the manoeuvre comprises receiving data indicative of route boundaries and data indicative of a target pose of at least a part of the vehicle within the route boundaries. The route boundaries may refer to location boundaries. The target pose generally refers to a desired position and orientation of at least a part of the vehicle.

The data indicative of the route boundaries may be obtained from route information.

The provision of obtaining a set of entry conditions indicating allowable vehicle states prior to commencing the manoeuvre may comprise defining first route boundaries for a first part of the vehicle and second route boundaries for a second part of the vehicle.

For a vehicle comprising several vehicle units, such as a vehicle combination with a towing vehicle and a trailing vehicle, the provision of obtaining a set of entry conditions indicating allowable vehicle states prior to commencing the manoeuvre may comprise defining first route boundaries for a towing vehicle and second route boundaries for any connected trailing vehicle unit of the vehicle. Typically, the second route boundaries are defined narrower than the first route boundaries. This may be particularly beneficial for vehicles with a trailing vehicle unit, such as a trailer adapted for loading and unloading. By providing less stricter boundaries for the towing vehicle, such as the truck, it becomes possible to provide more space for manoeuvring the vehicle in order to position the trailing unit in a correct pose. Providing more space for the truck may also be advantageous for performing the manoeuvre since the direction of the trailing unit may generally require bigger motions of the truck. One example may relate to a reverse manoeuvre of the vehicle into a loading spot with a tractor-trailer combination, where only the trailer is subject to narrow location boundaries, while the tractor can manoeuvre more freely to be able to counteract such that the trailer does not deviate from its desired path/target pose.

The data indicative of the target pose of at least a part of the vehicle within the route boundaries may be obtained from a transportation mission for the vehicle. The target pose may e.g. be determined in view of the unload/load requirements of the vehicle.

The provision of obtaining a set of entry conditions indicating allowable vehicle states prior to commencing the manoeuvre may comprise obtaining environmental variables. Example of environmental variables may be disturbances from variables such as weather conditions, including side wind affecting the side forces on the vehicle, ambient temperature, rain classification data, amount of water on road etc. By way of example, rain can affect the friction on the road surface such that control of the vehicle may change along the route. Ambient temperature can also be of interest with the same reasoning of friction, typically being lower for some temperatures. By defining the entry conditions also on the basis of one or more environmental variables, an even more sophisticated method is provided that may contribute to an even more reliable motion control of the vehicle during the manoeuvre. In order words, this configuration of the entry conditions may further increase the probability of arriving at the desired target location in an efficient manner.

According to example embodiments, the provision of determining the current vehicle state may comprise determining any one of vehicle linear speed, vehicle angular speed, vehicle linear acceleration, vehicle angular acceleration, wheel rotation speed, tyre acceleration, tyre normal load, slip angle, and steer angle.

The method may further comprise controlling the manoeuvre of the vehicle on the basis of the obtained set of entry conditions.

The method further comprises predicting a probability of reaching the target pose on the basis of the route boundaries. Optionally, the method may further comprise monitoring the vehicle state during the manoeuvre and predicting a probability of reaching the target pose on the basis of the route boundaries and the monitored vehicle state of the vehicle.

If the predicted probability of reaching the target pose is below a threshold value, the method further comprises determining an adjusted manoeuvre of the vehicle in an essentially opposite direction to the first main route direction, and controlling the vehicle to switch from the manoeuvre to the determined adjusted manoeuvre. The predicted probability of reaching the target pose may be determined by performing a reachability analysis.

The method may further comprise monitoring the vehicle state during the manoeuvre, and if the monitored vehicle state deviates from the entry conditions, the method may further comprise determining an adjusted manoeuvre of the vehicle in an essentially opposite direction to the first main route direction, and further controlling the vehicle to switch from the manoeuvre to the determined adjusted manoeuvre.

The provision of determining an adjusted manoeuvre of the vehicle in an essentially opposite direction to the first main route direction may be determined on the basis of the target pose of the vehicle.

The method may further comprise controlling the vehicle in the essentially opposite direction to the first main route direction on the basis of the target pose of the articulated vehicle combination.

The method may further comprise controlling the vehicle to switch from the manoeuvre to the determined adjusted manoeuvre, if the current vehicle state deviates from the entry conditions by comparing the deviation with a threshold value.

The method may further comprise controlling the vehicle in the essentially opposite direction to the first main route direction until the current state of the vehicle is again comprised in the set of entry conditions. Optionally, the method may further comprise performing a forward driving if the entry conditions are not fulfilled.

The method may further comprise determining a time period for performing the operation in the essentially opposite direction until the current state of the vehicle is again comprised in the set of entry conditions.

The method may further comprise controlling the vehicle in the essentially opposite direction until the current state of the vehicle exceeds a threshold value indicative of a route position of the vehicle permitting the vehicle to restart a new manoeuvre along the first main route direction.

The method may further comprise determining a time period for completing the manoeuvre along the first main route direction.

The manoeuvre may be a reverse manoeuvre. Hence, the first main route direction may be a reverse driving route direction. The essentially opposite direction may be a forward driving direction.

The method may further comprise determining if the current vehicle state is within the set of entry conditions.

The provision of determining if the current vehicle state is within the set of entry conditions may comprise a pre-determined nominal trajectory.

The provision of determining if the current vehicle state is within the set of entry conditions may comprise vehicle geometry and map information.

The method may further comprise using the set of entry conditions during the manoeuvre so as to monitor the vehicle state.

The method may further comprise obtaining a tyre model to predict a tyre wear in dependence of the current vehicle state.

By modelling tyre wear in dependence of the current vehicle state, the vehicle control functions can be configured to improve controllability of the vehicle by determining and adjusting the manoeuvre and a possible desired or needed retake of the operation. This would then mean that a retake can be performed also if a reversal manoeuvre given the current vehicle initial state is expected to lead to large tyre wear. By further applying a tyre model to the control of the vehicle during the manoeuvre, additional restrictions are added to the control of the vehicle so as to provide an even more valid manoeuvre along the route.

The proposed method may also generally have a positive impact on the tyre lifetime. For instance, the vehicle control can be performed with a target to minimize or at least reduce tyre wear. By way of example, the method may comprise the optional step of coordinating one or more motion support devices of vehicle to reduce tyre wear under constraints comprising fulfilment of a motion request.

As described herein, the tyre model generally defines a relationship between current or future vehicle motion state and tyre wear. This means that the tyre model can be seen as a function or mapping between vehicle motion state and tyre wear.

The tyre model may be parameterized by one or more tyre parameters obtained from input data related to at least one parameter of a tyre on the vehicle.

The method may further comprise obtaining input data related to the at least one parameter of a tyre on the vehicle from one or more sensors arranged to measure one or more operating parameters of the tyre. The sensors can be configured to provide real-time data from the tyre, thus enabling a real-time dynamic adaptation of the tyre model which quickly reacts to changes in tyre properties. Thus, if tyre properties change, so will the tyre model, which is an advantage.

The input data relating to the measured one or more operating parameters may comprise any of: vehicle speed, wheel rotation speed, tyre pressure, tyre temperature, tyre acceleration, tyre strain, tyre GPS position, weather, ambient temperature, rain classification data, amount of water on road, normal load, slip angle, steer angle, and applied torque on one or more wheels. Thus, the tyre model is able to adjust to many different operating parameters which is an advantage.

The input data may comprise data obtained from a memory related to tyre design, wherein the data related to tyre design comprises any of: tyre nominal dimension, tyre structural characteristics, tyre chemical composition, and tyre history. Different types of tyres may have different properties and may react differently to events such as low road friction, high temperatures, rain, and so on. By accounting for the tyre design, the model can be made more accurate.

The one or more tyre parameters may comprise any of: tyre wear, tyre longitudinal stiffness, tyre lateral stiffness, tyre rolling resistance, tyre peak friction, tyre rolling radius, tyre contact patch properties, tyre balance properties and wheel alignment properties. It is an advantage to be able to capture all these different tyre parameters by the tyre model. Having accurate information about one or more of these parameters facilitates efficient and/or safe vehicle control.

The method may comprise repeatedly updating at least part of the one or more tyre parameters based on updated input data. Thus, the tyre model is kept up to date, despite changes in, e.g., operating conditions and tyre state.

The method may further comprise coordinating one or more motion support devices of the heavy-duty vehicle to perform the manoeuvre of the vehicle along the first main route direction.

The method may further comprise obtaining route information and controlling the one or more motion support devices to perform the manoeuvre of the vehicle along the first main route direction.

The method may further comprise controlling motion of the vehicle based on the entry conditions and the determined current vehicle state. By way of example, the provision of determining the vehicle state further comprises determining a vehicle motion state. The provision of determining the vehicle motion state may comprise determining any one of vehicle linear speed, vehicle angular speed, vehicle linear acceleration, vehicle angular acceleration, wheel rotation speed, tyre acceleration, tyre normal load, slip angle, and steer angle. The vehicle motion state may also contain a value of the applied torque on one or more wheels.

Typically, the provision of determining the vehicle motion state may comprise determining any one of longitudinal wheel slip of a respective wheel of the tyre, lateral wheel slip of the respective wheel of the tyre, a normal load of the respective wheel of the tyre, an acceleration of the respective wheel of the tyre, and a rotational velocity of the respective wheel of the tyre.

The vehicle may be any one of a single vehicle unit and a vehicle combination having at least two vehicle units interconnected. By way of example, the single vehicle unit is a truck. The single vehicle unit may e.g. be a towing vehicle such as an autonomous tractor of a truck or an autonomous dolly vehicle.

In an example embodiment when the vehicle is a vehicle combination having at least two vehicle units interconnected, the at least two vehicle units are typically interconnected via at least one articulated joint.

The vehicle combination may be an autonomous vehicle combination comprising an autonomous towing vehicle.

The towing vehicle may be an autonomous tractor of a truck or an autonomous dolly vehicle.

The vehicle combination may generally comprise a first vehicle unit and second vehicle unit. The first vehicle unit is the towing vehicle. The second vehicle unit may be a semi-trailer, a trailer, or an autonomous dolly vehicle.

There is also disclosed herein control units, computer programs, computer readable media, computer program products, and vehicles associated with the above discussed advantages.

According to a second aspect, there is provided a computer program comprising program code means for performing any one of the steps, provision and/or embodiments of the first aspect when said program is run on a computer or on processing circuitry of a control unit.

According to a third aspect, there is provided a computer readable medium carrying a computer program comprising program code means for performing any one of the steps, provision and/or embodiments of the first aspect when said program product is run on a computer or on processing circuitry of a control unit.

According to a fourth aspect, there is provided a control unit for controlling a vehicle in preparation for a manoeuvre along a first main route direction, the control unit being configured to perform any one of the steps, provision and/or embodiments of the first aspect.

Further effects and features of the second, third and fourth aspects are largely analogous to those described above in relation to the first aspect.

According to a fifth aspect, there is provided a vehicle comprising a control unit according to the fourth aspect.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention, as defined by the appended claims.

BRIEF DESCRIPTION OF THE DRAWINGS

With reference to the appended drawings, below follows a more detailed description of embodiments of the invention cited as examples. In the drawings:

Figures 1A-1C    schematically illustrate a vehicle for cargo transport;
Figure 2         is a graph showing an example of a tyre model;
Figure 3         is a block diagram illustrating motion support device control;
Figure 4         shows a control architecture for controlling a vehicle;
Figure 5         illustrates an example vehicle motion support device control system;
Figures 6A-C     are flow charts illustrating example methods;
Figure 7         schematically illustrates a sensor unit and/or a control unit; and
Figure 8         shows an example computer program product.

DETAILED DESCRIPTION OF EXAMPLE EMBODIMENTS

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

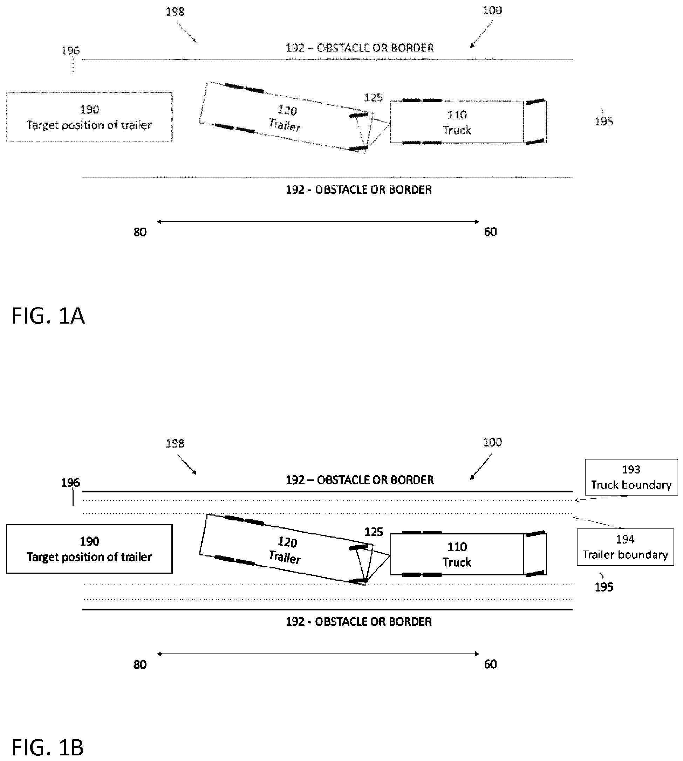

Figs. 1A to 1C illustrate examples of various types of heavy-duty vehicles 100. In Figs. 1A to 1C, the vehicles are autonomous vehicle combinations having a first vehicle unit 110 and a second vehicle unit 120. In Figs. 1A and 1B, the vehicle combination 100 comprises an autonomous truck 110 which is arranged to tow a trailer 120. The truck 110 comprises a vehicle control unit (VCU) arranged to control various functions of the vehicle combination 100. For instance, the VCU may be arranged to perform a vehicle motion management (VMM) function comprising controlling a manoeuvre of the vehicle, including e.g. performing a reverse manoeuvre, a forward manoeuvre etc. The vehicle motion management (VMM) function may sometimes also be denoted as a control allocation function. The VMM function is further described herein.

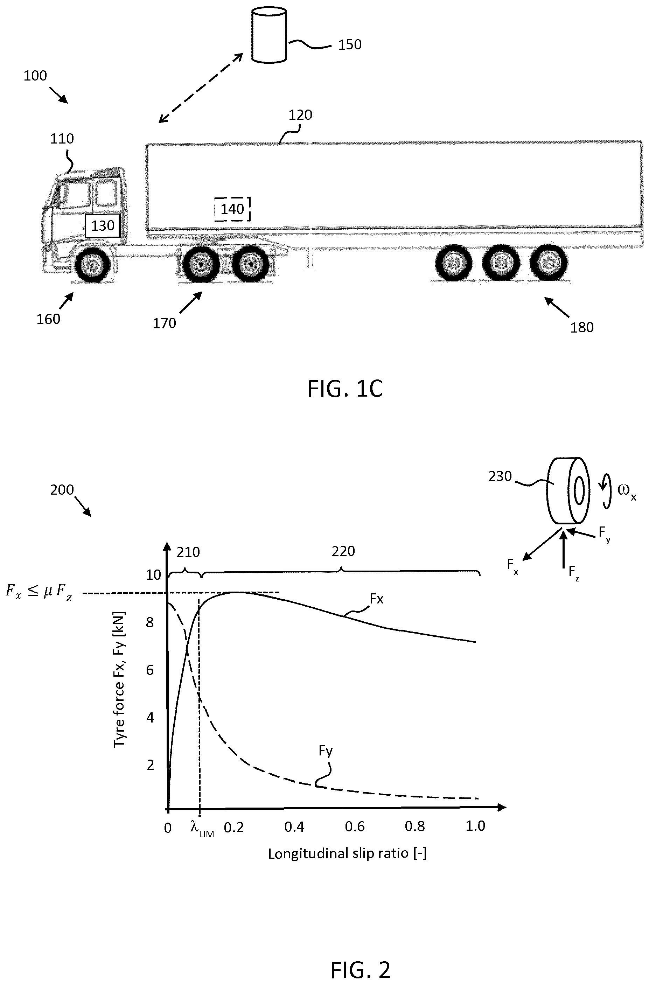

In Fig. 1C, the vehicle combination 100 comprises a tractor unit 110 which is arranged to tow a trailer unit 120. The tractor unit 110 comprises a vehicle control unit (VCU) 130 arranged to control various functions of the vehicle 100. For instance, the VCU may be arranged to perform a vehicle motion management (VMM) function comprising controlling a manoeuvre of the vehicle, including e.g. performing a reverse manoeuvre, a forward manoeuvre etc. The vehicle motion management (VMM) function may sometimes also be denoted as a control allocation function.

Accordingly, the towing vehicle 110 may be a tractor unit connected to a trailing vehicle in the form of a semitrailer 120, as illustrated in Fig. 1C. In addition, or alternatively, the towing vehicle 110 may be the truck 110 connected to a trailing vehicle in the form of the trailer 120, as illustrated in Figs. 1A and 1B. The trailer 120 is articulated connected to the towing vehicle 110. In Figs. 1A and 1B, the trailer 120 is articulated connected to a rear part of the truck 110. The articulated connection forms an articulation joint 125. The articulation angle of the articulation joint 125, and thus the articulation angle of the vehicle combination, is favourably monitored and determined by a sensor, as is commonly known in the art.

The trailer unit 120 may optionally also comprises a VCU 140, which then controls one or more functions on the trailer 120. The VCU or VCUs may be communicatively coupled, e.g., via wireless link, to a remote server 150, as shown e.g. in Fig. 1C. This remote server may be arranged to perform various configurations of the ECU, and to provide various forms of data to the ECU 130, such as providing data regarding entry conditions and vehicle states, as will be discussed in more detail below.

The vehicle combination 100 may of course also comprise additional vehicle units, such as one or more dolly units and more than one trailer unit.

The vehicle combination 100 is supported by wheels, where each wheel comprises a tyre. The vehicle combination 100 comprises multiple axles, including a front axle and a number of rear axles (not illustrated). With reference to e.g. Fig. 1C, the towing vehicle unit 110 has front wheels 160 which are normally steered, and rear wheels 170 of which at least one pair are driven wheels. It may also be possible to provide each vehicle of the vehicle combination with several steerable axles on some configurations. Generally, the rear wheels of the tractor 110 may be mounted on tag or pusher axles. A tag axle is where the rear-most drive axle is non-powered, also referred to as a free-rolling or dead axle. A pusher axle is where the forward-most drive axle is not powered. The trailer unit 120 is supported on trailer wheels 180. Trailers with driven wheels, and even a steered axle, are also possible.

One or more of the rear axles are here also non-steering rear axles. Further, one or more of the rear axles and/or one of the axles on the trailer 120 are here a liftable axle. A lift axle, also known as a retractable axle, is an axle which can be raised so that its tyres are not touching the road surface. The vehicle may likewise be configured without liftable axles.

One or more of the wheels may also be mounted with an active suspension (not illustrated) which may be controlled by the VCU 130, 140, e.g., in order to adjust a normal force of one or more tyres. Accordingly, the heavy-duty vehicle here comprises an active suspension system.

The tyres on the wheels may generally contribute in determining the behaviour and capabilities of the vehicle 100. A well-designed set of tyres will provide both good traction and fuel economy, while a poorly designed set of tyres, or overly worn tyres, are likely to reduce both traction and fuel economy and may even result in an unstable vehicle combination, which of course is undesired.

The present disclosure at least partly also relates to software tyre models which model tyre parameters and tyre behaviours, e.g., for a given vehicle state such as a vehicle velocity, normal load, and so on. The tyre models can be used with advantage by the VCU to optimize control of the vehicle 100. For example, the tyre models disclosed herein may be used to model a relationship between tyre wear and vehicle motion state to better control the manoeuvrer of the vehicle combination. Some example tyre models may thus be used to estimate a tyre wear rate in dependence of a vehicle state, i.e., if a certain vehicle manoeuvre or operation results in excessive tyre wear or not. Further example tyre models discussed herein model tyre rolling resistance, such that the VCU can optimize vehicle control to reduce tyre rolling resistance and thus obtain an increased energy efficiency for a given transport mission or just for a single manoeuvre.

The tyre models discussed herein are configured to be dynamically updated as the vehicle is operated. Thus, preferably, the tyre models are dynamic and not static, which means that the tyre models will be able to better and more closely model tyre parameters in dependence of, e.g., the overall driving scenario and the state of the tyres over time as the tyre characteristics change due to wear and variation in inflation pressure and temperature.

Some important properties and characteristic parameters of a tyre will now be discussed. These tyre parameters are optionally comprised in the tyre model, either as tyre parameters from which other capabilities and characteristics of the tyre can be determined by the VCU 130, 140, or simply as tyre characteristics which can be used more or less directly by the VCU 130, 140 to optimize various control decisions.

A tyre rotating at higher speeds tends to develop a larger diameter, i.e., a larger rolling radius, due to centrifugal forces that force the tread rubber away from the axis of rotation. This effect is often referred to as centrifugal growth. As the tyre diameter grows, the tyre width decreases. Excessive centrifugal growth may significantly impact the behaviour of a tyre.

The pneumatic trail of a tyre is the trail-like effect generated by resilient material tyres rolling on a hard surface and subject to side loads, as in a turn. The pneumatic trail parameter of a tyre describes the distance where the resultant force of a tyre sideslip occurs behind the geometric centre of the contact patch of the tyre.

Slip angle or sideslip angle, denoted with $\alpha$ herein, is a standardized term defined in accordance with ISO8855:2011, section 5.2.12, "ISO8855 Road Vehicles - Vehicle dynamics and road-holding ability". The slip angle is the angle between a rolling wheel's direction towards which it is pointing and the actual direction of travel, i.e., the angle of the vector sum of the wheel translational velocity.

The relaxation length of a tyre is a property of a pneumatic tyre that describes the delay between when a slip angle is introduced and when the cornering force reaches its steady state value. Normally, relaxation length is defined as the rolling distance needed by the tyre to reach 63% of the steady state lateral force, although other definitions are also possible.

Vertical stiffness, or spring rate, is the ratio of vertical force to vertical deflection of the tyre, and it contributes to the overall suspension performance of the vehicle. In general, spring rate increases with inflation pressure.

The contact patch, or footprint, of the tyre, is the area of the tread that is in contact with the road surface. This area transmits forces between the tyre and the road via friction. The length-to-width ratio of the contact patch affects steering and cornering behaviour. The tyre tread and sidewall elements undergo deformation and recovery as they enter and exit the footprint. Since the rubber is elastomeric, it is deformed during this cycle. As the rubber deforms and recovers, it imparts cyclical forces into the vehicle. These variations are collectively referred to as tyre uniformity. Tyre uniformity is characterized by radial force variation (RFV), lateral force variation (LFV) and tangential force variation. Radial and lateral force variation is measured on a force variation machine at the end of the manufacturing process. Tyres outside the specified limits for RFV and LFV are rejected. Geometric parameters, including radial runout, lateral runout, and sidewall bulge, are measured using a tyre uniformity machine at the tyre factory at the end of the manufacturing process as a quality check.

The cornering force or side force of a tyre is the lateral (i.e. parallel to the road surface) force produced by a vehicle tyre during cornering.

Rolling resistance is the resistance to rolling caused by deformation of the tyre in contact with the road surface. As the tyre rolls, tread enters the contact area and is deformed flat to conform to the roadway. The energy required to make the deformation depends on the inflation pressure, rotating speed, and numerous physical properties of the tyre structure, such as spring force and stiffness. Tyre makers often seek lower rolling resistance tyre constructions to improve fuel economy in trucks, where rolling resistance accounts for a high proportion of fuel consumption.

Self-aligning torque (SAT) is the torque that a tyre creates as it rolls along that tends to steer it, i.e. rotate it around its vertical axis.

A tyre model can be used to describe the properties of a given tyre, such as those above and also other properties. For instance, a tyre model can be used to define a relationship between longitudinal tyre force Fx for a given wheel and an equivalent longitudinal wheel slip for the wheel. Longitudinal wheel slip $\lambda_x$ relates to a difference between wheel rotational velocity and speed over ground and will be discussed in more detail below. Wheel rotation speed $\omega$ is a rotational speed of the wheel, given in units of, e.g., rotations per minute (rpm) or angular velocity in terms radians/second (rad/sec) or degrees/second (deg/sec). The wheel behaviour in terms of wheel force generated in longitudinal direction (in the rolling direction) and/or lateral direction (orthogonal to the longitudinal direction) as function of wheel slip is discussed in "Tyre and vehicle dynamics", Elsevier Ltd. 2012, ISBN 978-0-08-097016-5, by Hans Pacejka. See, e.g., chapter 7 where the relationship between wheel slip and longitudinal force is discussed.

Longitudinal wheel slip $\lambda_x$ may, in accordance with SAE J670 (SAE Vehicle Dynamics Standards Committee January 24, 2008) be defined as

$$\lambda_x = \frac{R\omega - v_x}{max(|R\omega|, |v_x|)}$$

where R is an effective wheel radius in meters, $\omega$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel.

The sideslip angle or slip angle of a tyre is the angle between the direction it is moving and the direction it is pointing. Lateral slip can occur, for instance, in cornering, and is enabled by deformation in the tyre structure and tread. Despite the name, no actual sliding is necessary for small slip angles. The slip angle is normally defined as

$$\alpha = \arctan\left(\frac{v_y}{|v_x|}\right)$$

where $v_x$ is a longitudinal velocity component of the wheel motion, and $v_y$ is a lateral velocity component of the wheel motion. Lateral tyre slip is also discussed in detail in, e.g., "Tyre and vehicle dynamics", Elsevier Ltd. 2012, ISBN 978-0-08-097016-5, by Hans Pacejka.

Lateral wheel slip $\lambda_y$ can optionally also be defined as

$$\lambda_y = \frac{v_y}{max(|R\omega|, |v_x|)}$$

where $v_y$ is the lateral speed of the wheel (in the coordinate system of the wheel), measured on a direction orthogonal to the direction of the longitudinal speed $v_x$.

In order for a wheel (or tyre) to produce a wheel force, slip must occur. For smaller slip values the relationship between slip and generated force are approximately linear, where the proportionality constant is often denoted as the slip stiffness of the tyre. With reference to Figure 2, a tyre 230 (such as any of the tyres 160, 170, 180) is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, where $\mu$ is a friction coefficient associated with a road friction condition. The maximum available lateral force for a given lateral slip can be described by the so-called Magic Formula as described in "Tyre and vehicle dynamics", Elsevier Ltd. 2012, ISBN 978-0-08-097016-5, by Hans Pacejka.

Figure 2 shows a graph 200 illustrating an example of achievable tyre forces $F_x$, $F_y$ as function of wheel slip. The longitudinal tyre force Fx shows an almost linearly increasing part 210 for small wheel slips, followed by a part 220 with more non-linear behaviour for larger wheel slips. The obtainable lateral tyre force Fy decreases rapidly even at relatively small longitudinal wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit $\lambda_{LIM}$ on the order of, e.g., 0.1, can be imposed on a given wheel. For larger wheel slips, e.g., exceeding 0.1, a more non-linear region 220 is seen.

The wheel forces can in the linear region be described by a stiffness both for longitudinal and lateral tyre force, as

$$F_x = C_x(w, F_z)\lambda_x$$

$$F_y = C_y(w, F_z)\alpha$$

where w is a parameter indicating tyre wear, $\alpha$ is a slip angle of the tyre, and where $C_x$ and $C_y$ are stiffness functions. The tyre stiffnesses $C_x$ and $C_y$ normally increase with wear w and normal force $F_z$. Both functions above represent tyre models which depend on tyre parameters and vehicle state properties. Given a tyre model such as the function $C_x(\cdot)\lambda_x$ and/or the function $C_y(\cdot)\alpha$ and input data related to the tyre parameters w, $F_z$, it is possible for a VCU to obtain an accurate relationship between generated wheel force and wheel slip. This relationship will change in dependence of the tyre parameters, i.e., the relationship will be a dynamic relationship which is updated over time as the tyre wears and as the normal force $F_z$ of the tyre changes.

A tyre model of this kind can be determined by practical experimentation, analytical derivation, computer simulation, or a combination of the above. In practice, the tyre model may be represented by a look-up table (LUT) indexed by the tyre parameters, or as a set of coefficients describing a polynomial or the like. Typically, the set of coefficients are selected based on the tyre parameters, and where the polynomial then describes the relationship between tyre behaviour and vehicle state.

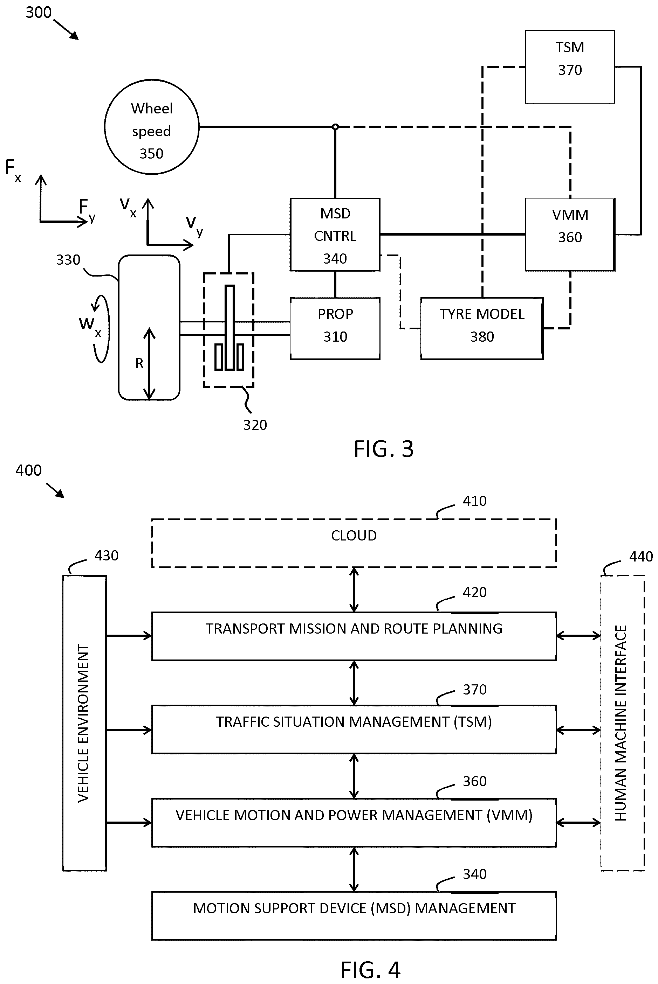

Figure 3 schematically illustrates functionality 300 for controlling a wheel 330 by some example MSDs here comprising a friction brake 320 (such as a disc brake or a drum brake) and a propulsion device 310 (such as an electric machine or a combustion engine). The friction brake 320 and the propulsion device 310 are examples of wheel torque generating devices, which may also be referred to as actuators and which can be controlled by one or more motion support device control units 340. The control is based on, e.g., measurement data obtained from a wheel rotation speed sensor 350 and from other vehicle state sensors, such as radar sensors, lidar sensors, and also vision based sensors such as camera sensors and infra-red detectors. Other example torque generating motion support devices which may be controlled according to the arrangement and configurations herein comprise engine retarders and power steering devices. An MSD control unit 340 may be arranged to control one or more actuators. For instance, it is not uncommon that an MSD control unit is arranged to control MSDs for both wheels of an axle. By estimating vehicle unit motion using, e.g., global positioning systems, vision-based sensors, wheel rotation speed sensors, radar sensors and/or lidar sensors, and translating this vehicle unit motion into a local coordinate system of a given wheel (in terms of, e.g., longitudinal and lateral velocity components), it becomes possible to accurately estimate wheel slip in real time by comparing the vehicle unit motion in the wheel reference coordinate system to data obtained from the wheel rotation speed sensor 350 arranged in connection to the wheel.

Both the friction brake 320 and the propulsion device interacts with the road surface via a wheel 330 comprising a tyre. Thus, the tyre properties and behavioural characteristics has an impact on how the different control actions by the friction brake 320 and the propulsion device 310 generate vehicle motion. A software-based tyre model 380 is comprised in the system. This tyre model provides information about the tyre currently mounted on the wheel 330, its properties, and behavioural characteristics. The VMM 360 and/or the MSD control unit 340 uses the information provided by the tyre model to predict consequences of different control allocations. This means that the VMM and/or the MSD control unit can optimize control actions in dependence of the particular characteristics and properties of the tyre.

According to a first example, the VMM 360 uses input from the tyre model in order to predict a generated wheel force as a function of wheel slip. The prediction function, i.e., the mapping between slip and force is determined by the current tyre parameters such as tyre slip stiffness properties, tyre thread area temperature, tyre nominal inflation pressure, current tyre normal force, wheel rotation speed, tyre wear, and road friction coefficient. According to a second example, the tyre model is configured to predict a tyre wear rate of the tyre in g/km or g/s for an upcoming manoeuvre, where again the mapping between tyre wear rate and vehicle state is determined by the current tyre parameters. This allows the VMM function 360 to choose between different control options which all fulfil a desired global force generation, but which may be associated with significant different tyre wear rates. According to a third example, the tyre model is configured to predict a tyre rolling resistance of the tyre for an upcoming manoeuvre, vehicle state and vehicle configuration. This allows the VMM function 360 to choose between different control options and vehicle configurations which all fulfil a desired global force generation, but which may be associated with significant differences in tyre rolling resistance. Thus, the VMM function may, e.g., decide that it is beneficial in terms of both rolling resistance and tyre wear rate if a liftable axle is raised from the ground in a given driving scenario.

The tyre model may, as mention above, be implemented as a look-up table or other type of function. The tyre model is parameterized, i.e., defined, by one or more tyre parameters. This means that the function itself varies in dependence of the tyre properties. The tyre model can be used to model various relationships, as exemplified above, such as a relationship or mapping between wheel slip and generated wheel force, and/or a mapping between tyre wear rate and vehicle state such as tyre normal load, vehicle speed, and wheel slip. It is appreciated that the present disclosure is not limited to any particular form of tyre model structure. Rather, it is appreciated that many different types of mathematical and/or experimentally based functions and mappings can be used as the tyre model.

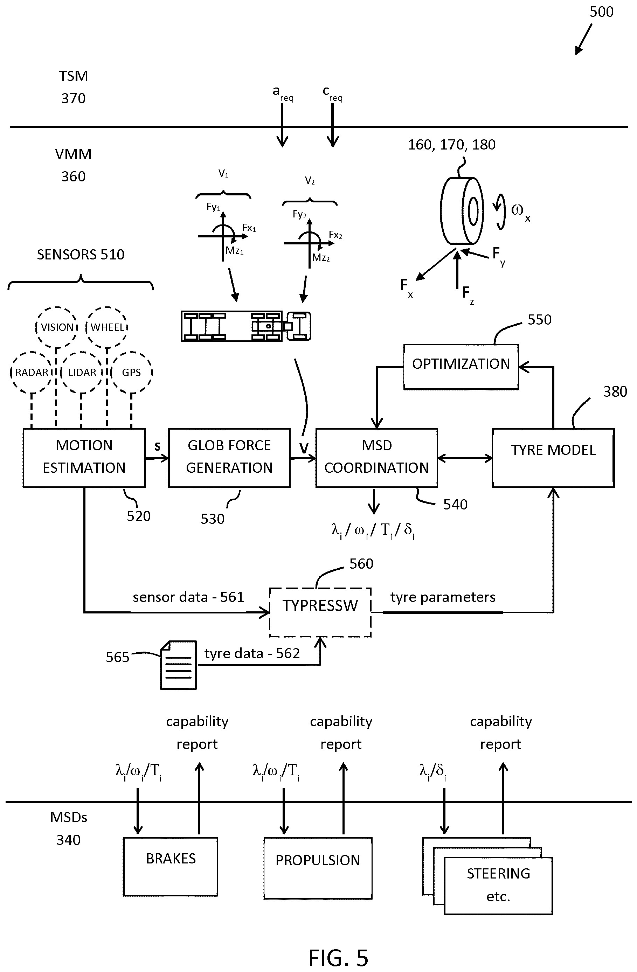

With reference also to Figure 4 and Figure 5, a traffic situation management (TSM) function 370 plans driving operations with a time horizon of, e.g., 1-10 seconds or so. This time frame corresponds to, e.g., the time it takes for the vehicle 100 to negotiate a curve. The vehicle manoeuvres, planned and executed by the TSM, can be associated with acceleration profiles and curvature profiles which describe a desired vehicle velocity and turning for a given manoeuvre. The TSM continuously requests the desired acceleration profiles $a_{req}$ and curvature profiles $c_{req}$ from the VMM function 360 which performs force allocation to meet the requests from the TSM in a safe and robust manner. The TSM function 370 may also base the determination of vehicle manoeuvre on the tyre model 380, as indicated in Figure 3. For instance, the TSM function 370 may compare two or more different manoeuvres which accomplish the same objective in terms of, e.g., tyre wear and/or rolling resistance, and then select the one which is most favourable in these respects.

Desired acceleration profiles and curvature profiles may optionally be determined based on input from a driver via a human machine interface 440 of the heavy-duty vehicle via normal control input devices such as a steering wheel, accelerator pedal and brake pedal, although the techniques disclosed herein are just as applicable with autonomous or semi-autonomous vehicles. The exact methods used for determining the acceleration profiles and curvature profiles is not within scope of the present disclosure and will therefore not be discussed in more detail herein. Notably, the traffic situation management and/or the transport mission and route planning function 420 may configure various properties of the vehicle, such as raising and lowering a liftable axle, adjusting suspensions, and so on.

Sensors arranged to provide data about the vehicle environment 430 provides input to the overall control stack 400, and a connection to remote processing resources, such as cloud-based processing resources 410 are also optionally comprised in the control stack. The remote server 150 in Figure 1 may be comprised in this type of cloud layer 410.

The VMM function 360 operates with a time horizon of about 0,1-1,5 seconds or so, and continuously transforms the acceleration profiles $a_{req}$ and curvature profiles $c_{req}$ into control commands for controlling vehicle motion functions, actuated by the different MSDs of the vehicle 100 which report back capabilities to the VMM, which in turn are used as constraints in the vehicle control. The accuracy of this control is improved by means of the advanced tyre models 380 discussed herein.

With reference mainly to Figure 5, the VMM function 360 performs vehicle state or motion estimation 520, i.e., the VMM function 360 continuously determines a vehicle state s (often a vector variable) comprising positions, speeds, accelerations, yaw motions, normal forces and articulation angles of the different units in the vehicle combination by monitoring vehicle state and behaviour using various sensors 510 arranged on the vehicle 100, often but not always in connection to the MSDs.

The result of the motion estimation 520, i.e., the estimated vehicle state s, is input to a global force generation module 530 which determines the required global forces on the vehicle units which need to be generated in order to meet the motion requests from the TSM 370. An MSD coordination function 540 allocates, e.g., wheel forces and coordinates other MSDs such as steering and suspension. The coordinated MSDs then together provide the desired lateral Fy and longitudinal Fx forces on the vehicle units, as well as the required moments Mz, to obtain the desired motion by the vehicle combination 100. As indicated in Figure 5, the MSD coordination function 540 may output any of wheel slips $\lambda_i$, wheel rotation speeds $\omega$, torques $T_i$ and/or steering angles $\delta$ to the different MSDs.

Turning again to Figs. 1A and 1B, there is illustrated one example of an automated transport solution (ATS) where an autonomous vehicle combination 100 in the form of the truck 110 and trailer 120 performs a transport missions within a limited space or confined areas, such as mining sites, logistics centres or ports. The limited space is defined by borders 192 arranged on opposite sides of the route, here illustrated as obstacle.

As illustrated in Figs. 1A and 1B, the vehicle combination 100 comprises the first vehicle unit in the form of the truck 110 and the second vehicle unit in the form of the trailer 120. The truck 110 and the trailer 120 are interconnected via the articulated joint 125. The truck 110 is an autonomous truck. Hence, in this example, the vehicle combination 100 is an autonomous articulated vehicle combination comprising the autonomous towing vehicle.

By way of example, the vehicle combination 100 typically performs a transport mission travelling along a main route 198 from a first point 195 to a second point 196 with goods in a repetitive manner. In this example, a direction from the first point 195 to the second point 196 defines a first main route direction. The transport mission could be to load goods in one end, the first point 195, and unload the goods in the other end, the second point 196. To perform the transport mission, the vehicle combination 100 may often need to be reversed into a correct position, corresponding to a target pose 190, in order for the goods to be unloaded or loaded. In other words, the main route direction here corresponds to the reverse driving direction.

The target pose 190 is generally the end pose of the vehicle combination at the loaded or unloaded position. In addition, the target pose 190 generally refers to a pose, i.e. both a position and a rotation. By way of example, the target pose generally refers to a position and orientation of a part of the vehicle combination 100 relative to a conventional coordinate system. Hence, when the vehicle combination 100 arrives in its target pose 190 at the second point 195, the vehicle combination may be controlled to raise e.g. a bucket to unload gravel/rocks over an edge, reverse into a position to have a straddle carrier unload a container that the vehicle carries or reverse into a loading bay to unload/load goods into the vehicle.

The target pose 190 where the goods should be loaded/unloaded is often well defined and with narrow margins, e.g. the crusher where the rocks shall be tipped into is at a specific location, the loading bay doors are at a specific location, the straddle carrier only drives over a specific position etc.

In the illustrated example in Figs. 1A to 1B, a reversing with the vehicle combination 100 means that to perform an adjustment on the rearmost part of the vehicle combination, the forwardmost unit must perform corrections (e.g. the tractor-trailer combination where the frontmost axle is the only steerable axle). The larger adjustment that is needed on the rearmost part, the larger correction is needed on the frontmost vehicle unit. Even small corrections on the rearmost part of the vehicle combination often require quite large adjustments on the frontmost vehicle unit.

When reversing into a narrow spot, such as for example a loading bay, the possible adjustments are quite small due to the constraints given by the width of the loading bay, and when there is no longer room to adjust when reversing, the vehicle combination 100 must be driven in a forward direction 60 and perform a retake. An experienced truck driver may be capable of estimating when there is no point of return in terms of further reversing the vehicle combination 100, thus requiring the driver to perform a retake, i.e. to drive forward again. However, for automated vehicle combinations, there may generally not always be provided any explicit instructions of when there is no return than performing a retake of the manoeuvring. Rather, the controllers of the vehicle combination 100 might continue trying to solve the reversing operation while the vehicle combination 100 is already positioned in an unsolvable problem without changing direction into the forward direction 60, thus allowing the vehicle combination to be straightened. Such operation of the vehicle combination 100 is generally rather ineffective as the vehicle combination 100 will continue reversing past the point where it is possible to end up in the correct spot.

In view of the above challenges, the following operations and methods provide for improving the efficiency of the manoeuvring of the vehicle combination 100, as will be further described herein.

In order to perform the reverse manoeuvring in an efficient manner, the control unit 130 may generally be configured to determine the geometry of the full vehicle combination, geographical information containing the entry and any boundaries of the route, and the target pose 190 for the full vehicle combination, or at least a part of vehicle combination. By way of example, it may be sufficient that only the position of the trailer vehicle unit 130 is accurately positioned in the target pose 190.

Fig. 1A shows an autonomous vehicle combination reversing in a narrow corridor. The vehicle combination 100 has ended up in a position where it is no longer possible to reach the target pose 190 of the trailer vehicle unit 120 by only reversing. Thus, the situation may generally require a retake. However, the vehicle combination 100 has not reached the boundaries 192 yet, so without knowledge of the boundaries, it may not be possible to reach the target pose 190. Rather, the vehicle combination 100 might continue reversing until the vehicle combination has crossed or bumped into one of the boundaries 192 with any part of the vehicle combination 100.

Hence, while referring to Figs. 1A and 1B, the control unit 130 is configured to control the vehicle combination 100 according to the following sequence of operations.

In this example embodiment, the control unit 130 is configured to obtain a set of entry conditions indicating allowable vehicle states prior to commencing a reversing operation.

The set of entry conditions indicates allowable vehicle states prior to commencing the reversing operation. The entry conditions defining the allowable vehicle states can be derived in several different ways by any one of the control units. By way of example, the set of entry conditions comprises a vehicle model of the vehicle units 110, 120 of the vehicle combination 100. Generally, the vehicle model contains data indicative of the vehicle geometry of the vehicle combination 100. In other words, the vehicle model contains data indicative of the vehicle geometry of each one of the vehicle units 110, 120 of the vehicle combination 100. In addition, the set of entry conditions comprises data indicative of route boundaries 192 and data indicative of the target pose 190 of at least a part of the vehicle combination 100 within the route boundaries 192. The data indicative of the route boundaries is obtained from route information and defines location boundaries. The data indicative of the target pose 190 of at least a part of the vehicle combination 100 within the route boundaries 192 is obtained from a transportation mission for the vehicle combination 100. The transportation mission can be transmitted from the remote server 150 to the control unit 130 of the truck 110

In another example, as illustrated in Fig. 1B, the set of entry conditions comprises defining first route boundaries 193 for the towing vehicle 110 and second route boundaries 194 for the connected trailer vehicle unit 120 of the vehicle combination 100. As illustrated in Fig. 1B, the second route boundaries 194 is defined narrower than the first route boundaries 193.

It is also possible to define the entry conditions by combining the above options of the vehicle model and the first route boundaries 193 for the towing vehicle 110 and the second route boundaries 194 for the connected trailer vehicle unit 120 of the vehicle combination 100.

In addition, the set of entry conditions here comprises disturbances from variables such as weather conditions, including side wind affecting the side forces on the vehicle, ambient temperature, rain classification data, amount of water on road etc. By way of example, rain can affect the friction on the road surface such that control of the vehicle may change along the route. Ambient temperature can also be of interest with the same reasoning of friction, typically being lower for some temperatures.

The control units 130 is also configured to determine a current vehicle state. The vehicle state is generally determined by one or more positioning systems. A positioning system may comprise any one of a radar sensor, lidar sensor, Global Navigation Satellite System (GNSS), vision-based sensor, such as camera, and infra-red sensors. In addition, or alternatively, the current vehicle state may be determined as discussed in relation to Fig. 5 and e.g. by means of the VMM function 360 and the vehicle state estimation 520. By way of example, the control unit 130 is further configured to determine the current vehicle state by determining any one of the vehicle linear speed, vehicle angular speed, vehicle linear acceleration, vehicle angular acceleration, wheel rotation speed, tyre acceleration, tyre normal load, slip angle, and steer angle.

Further, the control unit 130 is also configured initiate the reversal manoeuvre in a reverse direction 80 if the current vehicle state is comprised in the set of entry conditions. The reverse direction 80 is illustrated in Figs. 1A and 1B.

Subsequently, the control unit 130 is configured to control the reversal manoeuvre of the vehicle combination 100 on the basis of the obtained set of entry conditions. During the reversal manoeuvre of the vehicle combination 100, the control unit 130 is configured and operable to continuously monitor the vehicle state to detect when, or if, the monitored vehicle state deviates from the entry conditions.

If the control unit 130 determines that a current vehicle state of the vehicle combination is not comprised in the set of entry conditions, i.e. if the control unit 130 determines that a current vehicle state of the vehicle combination 100 deviates from the entry conditions in preparation of the reversal manoeuvre, during any period of the reversal manoeuvre and/or at any location during the reversing operation, the control unit 130 here proceeds to determine a desired adjusted manoeuvre of the vehicle combination 100 in an essentially opposite direction to the reverse direction 80, generally corresponding to the forward direction 60 (see Figs. 1A and 1B) of the vehicle combination 100.

The adjusted manoeuvre in the forward direction 60 may generally be determined by the control unit 130 on the basis of the target pose 190 of the articulated vehicle combination 100 in relation to the boundaries 192.

In addition, or alternatively, the control unit 130 is configured to switch from the reversal manoeuvre to the adjusted manoeuvre if the current vehicle state deviates from the entry conditions by a threshold value. By way of example, the control unit 130 is configured to compare the determined current vehicle state with a threshold value indicative of a predetermined vehicle position of a needed position of the trailer vehicle unit 120 for ensuring that the trailer vehicle unit 120 can arrive at the target pose 190 without exceeding the entry conditions, such as the second boundaries 194.

As a further consequence of the determined deviation from the entry conditions, the control unit 130 is configured control the vehicle combination 100 to switch from the reversal manoeuvre to the adjusted manoeuvre, i.e. to operate the truck 110 and trailer 120 in the forward direction 60.

Then, when the control unit 130 has switched into an operational mode of controlling the vehicle combination 100 in the essentially forward direction 60, the control unit 130 is also configured and operable to control the vehicle combination 100 in the forward direction 60 on the basis of the target pose 190 of the vehicle combination 100. In general, the control unit 130 is operable to control the vehicle combination 100 in the forward direction 60 until a current state of the vehicle combination 100 is again comprised in the set of entry conditions.

Favourably, the control unit 130 is configured to control the vehicle combination 100 in the forward direction 60 until the current state of the vehicle combination 100 exceeds a route position threshold value indicative of a route position of the vehicle combination permitting the vehicle combination 100 to restart a new reversal manoeuvre.

As mentioned above, the control unit 130 is configured to continuously determine if the current vehicle state is within the set of entry conditions during the reversal manoeuvre, but also during the forward manoeuvre. By way of another example, the control unit 130 is configured to determine if a current vehicle state is within the set of entry conditions by comparing the reversal manoeuvrer or forward manoeuvrer with a pre-determined nominal trajectory. A driving profile of the pre-determined nominal trajectory is generally stored in a memory of the control unit 130. Other examples of storing the pre-determined nominal trajectory may also be conceivable depending on type of control function and control unit.

In addition, during the reversal manoeuvre and also during the forward manoeuvre, the control unit 130 is configured to continuously verify that the vehicle state is within the set of entry conditions using data containing the vehicle geometry and route/map information.

Optionally, the control unit 130 is further configured to monitor the vehicle state during the manoeuvre and predict a probability of reaching the target pose 190 on the basis of the route boundaries. If the predicted probability of reaching the target pose 190 is below a threshold value, the control unit 130 is configured to determine the adjusted manoeuvre of the vehicle combination 100 in the forward direction 60, and subsequently to control the vehicle combination 100 to switch from the manoeuvre to the determined adjusted manoeuvre. The probability of reaching the target pose 190 is by way of example determined by performing a reachability analysis. The process of performing a reachability analysis is generally performed by the processing circuitry of the control unit 130. Thus, it is understood that a vehicle control unit, such as the VCUs 130, 140 can be arranged to store an algorithm for performing the reachability analysis in a memory. The process of executing the reachability analysis can be provided in several different manners for autonomous vehicles and thus not further described herein. By predicting the probability of reaching the target pose 190, the control unit 130 uses e.g. the model of the vehicle and the monitored vehicle state to predict future locations of the vehicle so as to determine the need of a minor retake of the vehicle combination 100 long before the above deviation has reached. In this way, the control unit 130 can decide upon a minor retake rather than a major retake when the vehicle violates the deviation threshold. Such configuration of the control unit 130 allows for reducing the wear on the tyres, reducing the time of the manoeuvre, enhancing safety as well as reducing the risk of colliding with any surrounding objects that can either damage the ego vehicle or the surrounding objects.

As mentioned above, the TSM function 370 may also base the determination of reverse manoeuvre on the tyre model 380, as indicated in Figure 3.

By way of example, the MSD coordination function 540 is here supported by a tyre model function 380 which may continuously update software-based models of the tyres on the vehicle. The MSD coordination function 540 may, for instance, use the tyre model to determine a relationship between tyre wear and vehicle motion state to better control the reversal manoeuvre. Optionally, the tyre model may also be used to determine a relationship between wheel slip and generated wheel force as discussed in connection to Figure 2. Also, according to another example, the MSD coordination function may decide on a number of different control options and/or different MSD coordination solutions which all meet a current request from the TSM 370, and thereby also improve some secondary objective, like reducing a tyre wear rate and/or improving energy efficiency of the transportation mission by reducing a rolling resistance. This selection and/or optimization can be performed by an optimization module 550.

In other words, it is appreciated that there are often additional degrees of freedom available when performing the MSD coordination, meaning that a given set of global forces can often be obtained in many different ways. Each such MSD coordination solution can be evaluated based on the tyre model 380, which may then yield a preference towards some particular solution for the present reversal manoeuvre of the vehicle combination 100.

The tyre model is parameterized by one or more tyre parameters, such as tyre wear, tyre normal load, tyre slip stiffness, etc. These tyre parameters may of course be pre-configured. However, additional advantages may be obtained if the tyre parameters are estimated or otherwise determined based on tyre data obtained from memory 565 or based on tyre data obtained from one or more sensors 510. The tyre parameters may be estimated or at least regularly updated by a tyre parameter estimation software (TYPRESSW) module 560.

Generally, the vehicle control methods disclosed herein and the different example tyre models 380 may be based on input signals comprising tyre based sensors such as pressure sensors, thread wear sensors, temperature sensors, vibration sensors, rim-based sensors, and the like. The input signals may also comprise data obtained from other sensors arranged on the vehicle 100, such as wheel rotation speed sensors, radar sensors, lidar sensors, vibration sensors, acoustic sensors, and the like.

The input to the TYPRESSW module 560, and optionally also to the tyre model 380 may comprise wheel speed $v_x$ relative to the road surface, wheel rotation speed $\omega_x$, tyre acceleration, tyre pressure, tyre temperature, tyre strain, tyre GPS position and weather data, ambient temperature, rain classification (obtained from a rain sensor, and/or from wiper speed, etc.), normal load $F_z$, slip angle $\alpha$ and/or steered angle $\delta$, and applied torque (propulsion and/or braking torque).

Thus, it is understood that a vehicle control unit, such as the VCUs 130, 140 can be arranged to store a tyre model 380 in a memory, e.g., as a look-up table or mathematical function. The tyre model is arranged to be stored in the memory as a function of the current operating condition and parameters of the tyre. This means that the tyre model can advantageously be adjusted in dependence of the operating condition and general state of the tyre, which means that a more accurate model is obtained compared to one which does not account for the particulars of the tyre. The model which is stored in memory can be determined analytically or experimentally based on the structural design particulars and chemical composition of the tyre which is mounted on the wheel. Also, the control unit can be configured to access a set of different models which are selected depending on the current tyre operating condition. One tyre model can be tailored for high load driving, where normal forces are large, another tyre model can be tailored for slippery road conditions where road friction is low, and so on. The selection of a model to use can be based on a pre-determined set of selection rules.

Thus, the model may be configured to take, e.g., normal force or road friction as input parameters, thereby obtaining the tyre model in dependence of a current operating condition of the wheel. It is appreciated that many aspects of the operating conditions can be approximated by default operating condition parameters, while other aspects of the operating conditions can be roughly classified into a smaller number of classes. Thus, obtaining the tyre model in dependence of a current operating condition of the wheel does not necessarily mean that a large number of different models need to be stored, or a complicated analytical function which is able to account for variation in operating condition with fine granularity. Rather, it may be enough with two or three different models which are selected depending on operating condition. For instance, one model to be used when the vehicle is heavily loaded and another model to be used otherwise. In all cases, a mapping between tyre force and wheel slip changes in some way in dependence of the operating condition, which improves the precision of the mapping.

The tyre model may also be implemented at least partly as an adaptive model configured to automatically or at least semi-automatically adapt to the current operating conditions of the vehicle. This can be achieved by constantly monitoring the response of a given wheel in terms of wheel force generated in response to a given wheel slip request, and/or monitoring the response of the vehicle 100 in response to the wheel slip requests. The adaptive model can then be adjusted to more accurately model the wheel forces obtained in response to a given wheel slip request from a wheel.

The outputs from the tyre model 380 can optionally be grouped into two categories: current state estimates and model parameters. Current state estimates represent an estimate of instantaneous tyre and wheel states. Model Parameters is a group of signals that cover the current estimated tyre model 'coefficients', based on a shared common tyre model definition. The tyre model (or models) may be used by the VCU 130, 140 to predict, e.g., what forces, rolling radius, rolling resistance, and wear rate, that can be expected given the current tyre state and vehicle motion characteristics.

The tyre model may be adapted to model a large variety of tyre parameters independently from each other or in combination, and capabilities in dependence of tyre design, tyre state, and vehicle motion state:

$$[F_{x,stat}, F_{y,stat}] = f1(C_{xo}, C_{yo}, T_{so}, P_o, F_{zo}, v_{xo}, T_s, P, F_z, v_x, w, \lambda_x, \lambda_y/\alpha, \mu, s_c),$$

$$[\sigma_x, \sigma_y] = f2(\sigma_{xo}, \sigma_{yo}, T_{so}, P_o, F_{zo}, v_{xo}, T_s, P, F_z, w, \lambda_x, \lambda_y/\alpha, \mu, s_c),$$

$$R = f3(R_o, T_{so}, P_o, F_{zo}, v_{xo}, T_s, P, F_z, v_x, w),$$

$$M_{rr} = f4(T_{so}, P_o, F_{zo}, v_{xo}, X_M, T_s, P, F_z, v_x, w, \lambda_x, \lambda_y/\alpha, \mu, s_c),$$

$$\dot{w} = f5(T_{so}, P_o, F_{zo}, v_{xo}, X_M, T_s, P, F_z, v_x, w, \lambda_x, \lambda_y/\alpha, \mu, s_c),$$

where f1-f5 are functions which may be analytical functions, numerical approximations, or just look-up tables. In the above equations

$F_{x,stat}$, $F_{y,stat}$ are the calculated steady state forces in long and lateral direction respectively,

$\sigma_x$, $\sigma_y$ are the instant relaxation lengths in longitudinal and lateral direction respectively,

$C_{xo}$, $C_{yo}$ are the longitudinal and lateral slip stiffness of the tyre at nominal condition,

$\sigma_{x,o}$, $\sigma_{y,o}$ are the longitudinal and lateral relaxation lengths at nom conditions,

$T_{s,o}$ is instant structural tyre tread area temperature,

$T_s$ is the nominal structural tyre tread area temperature,

P is the instant inflation pressure,

$P_o$ is the nominal inflation pressure,

$F_z$ is the instant vertical load,

$F_{z,o}$ is the nominal vertical load,

$v_x$ is the actual longitudinal speed of the tyre (over ground),

$v_{x,o}$ is a nominal longitudinal speed,

w is the wear (0 to 100%), 0% corresponds to new conditions,

$\sigma_x$, $\sigma_y$ are the instant relaxation lengths in longitudinal and lateral direction respectively,

$\lambda_x$, $\lambda_y$ are the instant slip values,

$\mu$ is the instant friction estimate,

$s_c$ is and instant discrete state surface condition,

R is the calculated instant (free) rolling radius,

$R_o$ is the (free) rolling radius under nominal conditions,

$M_{rr}$ is the calculated torque from rolling resistance, and

$\dot{w}$ is the wear rate of the tyre in g/km or g/s.

It is appreciated that the equations can also be re-phrased to depend on different definitions of lateral slip, e.g., $\alpha$ or $\lambda_y$ as discussed above.

Dynamic (instant) forces can also be derived. At least two alternative ways are possible, either relaxing the calculated static forces, or applying the static force formulas on calculated relaxed slip angles ($s_{i,dyn}$), by replacing $\lambda_x$, $\lambda_y$ in the formulas above with $\lambda_{x\text{-}dyn}$, $\lambda_{y\text{-}dyn}$.

$$F_{i,dyn} = \frac{1}{\sigma_i} \int \left( F_{i,stat} - F_{i,dyn} \right) \cdot v_x \, dt$$

$$\lambda_{i,dyn} = \frac{1}{\sigma_i} \int \left( \lambda_i - \lambda_{i,dyn} \right) \cdot v_x \, dt$$

where i is either x or y, i.e., longitudinal or lateral direction.

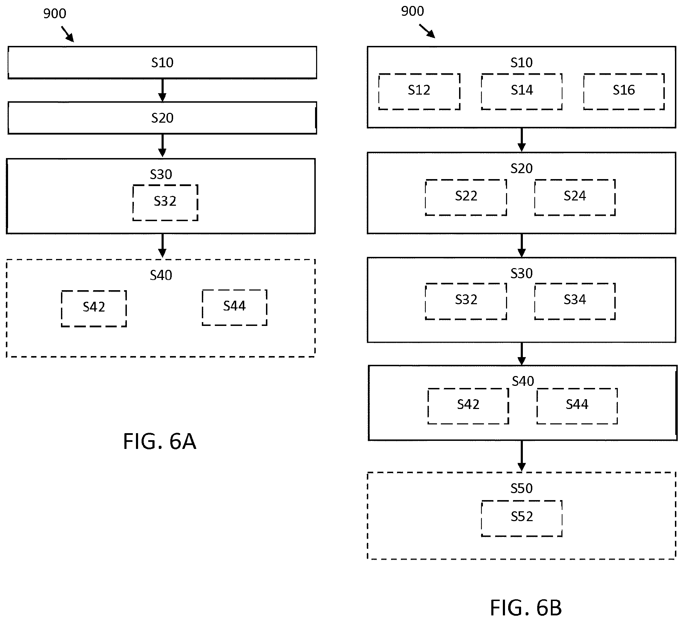

Figures 6A-C are flow charts which summarize and exemplify the discussions above. The methods may be performed by the VCU 130, 140 in the vehicle 100, or at least in part by the remote server 150. This VCU may be implemented in a central processing unit or distributed over several units. In addition, the vehicle 100 here comprises a number of wheel axles and one or more motion support devices arranged to coordinate the motion of the vehicle.

For ease of reference, a method 900 according to one example embodiment is described in relation to the vehicle combination 100 illustrated in e.g. Figs. 1A and 1B. In other words, the vehicle is an autonomous articulated vehicle combination 100 comprising at least two vehicle units 110 and 120 interconnected via the corresponding articulated joint 125. The method 900 may likewise be implemented in a single vehicle unit, such as cab of truck, a bus, or an articulated hauler. The methods as described in relation to Figs. 6A to 6C can be used in preparation of the reversal manoeuvre and/or during the reversal manoeuvre of the vehicle combination. Optionally, although not illustrated, the method as described in relation to Figs. 6A to 6C may also be used in preparation of a forward manoeuvre and/or during the forward manoeuvre of the vehicle combination.

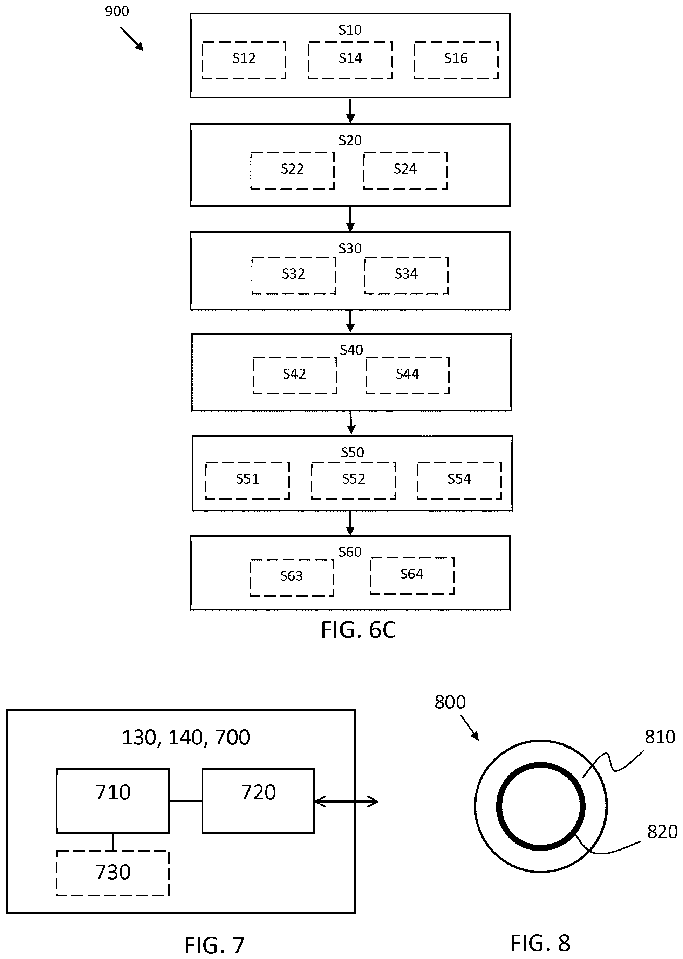

Turning now to Fig. 6a, there is illustrated one general example of the method 900. In Fig. 6A, the method 900 comprises a step of obtaining S10 the set of entry conditions indicating allowable vehicle states prior to commencing a reversing operation. Typically, the step of obtaining S10 the set of entry conditions indicating allowable vehicle states prior to commencing the reversing operation comprises obtaining the vehicle model of the vehicle units 110, 120 of the vehicle combination 100. The vehicle model is configured according to any one of the herein disclosed examples of the vehicle state or motion estimation, e.g. 520 in Fig. 5. The entry conditions defining the allowable vehicle states can, however, be derived in several different ways by any one of the control units. Non-excluding examples of obtaining the entry conditions are described in relation to the methods in Fig. 6B and 6C.

Further, the method 900 comprises a step of determining S20 a current vehicle state. The current vehicle state in preparation of the manoeuvre and also during the manoeuvre can be determined in several different manners, as mentioned herein. Non-excluding examples are provided in relation to e.g. Fig. 6B. In this example, the vehicle model contains data indicative of the vehicle geometry of the vehicle combination.

Moreover, the method 900 comprises a step of initiating S30 the reversal manoeuvre if the current vehicle state is comprised in the set of entry conditions.

In addition, or alternatively, the step of initiating S30 the reversal manoeuvre may only be executed if the determined current vehicle state corresponds to the predetermined vehicle position of the needed position of the trailer vehicle unit 120 for ensuring that the trailer vehicle unit 120 can arrive at the target pose 190 without exceeding the entry conditions, as will be further described in relation to the extended method illustrated in fig. 6B.

In other words, in a situation where the vehicle combination always operates between predetermined points 195, 196, the control unit 130 is configured to receive and use various types of data, including e.g. vehicle geometry and route/map data to determine the boundaries of where the vehicle combination is allowed to have any part of the vehicle combination. From this data, the control unit 130 determines the allowed entry conditions to enter and subsequently determine a possible motion for the vehicle combination to the target pose 190, as illustrated in e.g. Fig. 1B. That means, as long as the entry conditions are fulfilled, i.e. the current vehicle state is comprised in the set of entry conditions, the control unit 130 knows that the vehicle combination can end up in the target pose 190.

Optionally, the method also comprises determining S32 a time period for completing the reversing operation.

The method can be performed in an offline-mode phase and/or in an online-mode phase.

In the offline-mode phase of the method, the method may use a precomputed nominal trajectory as an entry condition, and further combines reachability analysis, vehicle geometry and route/map information to analyse the allowed entry conditions to safely enter and finalize the motion to the target pose 190.

In the online-mode phase of the method, the set of entry conditions is used in a hybrid motion controller that monitors that the vehicle's states satisfy the precomputed entry conditions and has the mandate to automatically switch motion direction along the precomputed trajectory if the entry condition is not met. In this manner, the method may be configured to mimic a truck driver which often needs to perform retakes to, e.g., successfully reverse to a loading bay in a logistics area with limited space. A limited space generally allows little room for manoeuvre of the vehicle combination.

Put it differently, a motion controller or the control unit 130 is configured to monitor the vehicle combination's states and ensures that the vehicle combination satisfies these entry conditions. Ensuring that the conditions are fulfilled means that the vehicle combination will always be able to reach the target pose 190. To further improve the behaviour, the motion controller may be given the mandate to switch motion direction (forward/reverse) if the entry conditions are not met. This means that if the vehicle combination can no longer reach its target pose (which is determined by if the entry conditions are fulfilled), it will perform a retake in the forward direction 60 i.e. drive forward until the entry conditions once again are fulfilled. Note that this can also be done with herein mentioned thresholds, so that it is ensured that the vehicle combination 100 is driven forward long enough to be able to reach the target pose 190 also with controller errors (in contrast to change motion direction as soon as the entry conditions are once again fulfilled).

Optionally, the method may further comprise controlling the one or more motion support devices to provide the reverse manoeuvring along the route 198, as further mentioned herein. Non-excluding examples are provided in relation to e.g. Fig. 6B.

Also, as will be further described in relation to Fig. 6B, the method generally comprises using the set of entry conditions during the entire reverse manoeuvre so as to monitor the vehicle state.

Turning now to Fig. 6B, there is illustrated an extended version of the method described in relation to Fig. 6A. The method illustrated in Fig. 6B comprises an additional number of optional steps of the method. Accordingly, Fig. 6B shows a method for controlling a vehicle in preparation for a reverse manoeuvre along the first main route direction.

As mentioned in relation to Fig. 6A, the method illustrated in Fig. 6B also comprises obtaining S10 a set of entry conditions indicating allowable vehicle states prior to commencing the reverse manoeuvre.

In this example, the step of obtaining S10 a set of entry conditions indicating allowable vehicle states prior to commencing a reversing operation comprises receiving S12 data indicative of the route boundaries 192 and data indicative of the target pose 190 of the trailer vehicle unit 120 of the vehicle combination 100 within the route boundaries 192. The data indicative of the route boundaries is obtained from the route information. The route information can be derived from the navigation system of the truck and/or from a combination of sensors arranged on the vehicle combination.

In general, the control unit 130 is configured to receive route information. Route information can for example be acquired from the navigation system of the vehicle. Route information may also be acquired from the remote server 150 or a cloud environment using a wireless connection of the vehicle. Furthermore, certain route information may be provided by the user of the vehicle.

In addition, or alternatively, the step of obtaining S10 a set of entry conditions indicating allowable vehicle states prior to commencing the reversing operation comprises defining S14 first route boundaries 193 for the towing vehicle 110 and second route boundaries 194 for the trailing vehicle unit 120 of the vehicle combination 100. The reversing operation can be started from e.g. location 195, as illustrated in Fig. 1B.

In addition, or alternatively, the step of obtaining S10 a set of entry conditions indicating allowable vehicle states prior to commencing the reversing operation comprises obtaining S16 environmental variables. The environmental variables can be provided as mentioned in relation to Figs. 1A. By way of example, one environmental variable is the side wind affecting the side forces on the vehicle combination. The environmental variables are measured and determined e.g. by the sensors arranged to provide data about the vehicle environment 430.

Such sensors are commonly used in various types of vehicles, and thus not further described herein.

Further, as also mentioned in relation to Fig. 6A, the method in Fig. 6B comprises determining S20 the current vehicle state.

In regard to determining S20 the current vehicle state, the method here comprises a step of determining S22 the current vehicle state by determining the pose of the vehicle. The pose of the vehicle is here determined by one or more positioning systems. A positioning system may comprise any one of a radar sensor, lidar sensor, Global Navigation Satellite System (GNSS), vision-based sensor, such as camera, and infra-red sensors. The positioning system may also include one or more articulation angle sensors for the articulation points. In addition, or alternatively, the articulation point may be determined by using e.g. a lidar sensor, vision-based sensor or the like so as to determine the articulation angles.

By way of example, the articulation angle sensors may be configured to record a plurality of articulation angles of one or more articulated joints, wherein the control unit is arranged to determine the vehicle state partly based on a set of articulation angles. This may further assist in the determination of the vehicle control input data, for example in the determination of the current vehicle state. The articulation angles may be recorded while the global positions are determined. Further, where the vehicle combination 100 presents a plurality of articulated joints, the articulation angles of separate joints may be recorded simultaneously. In some embodiments, during the executed reverse movement, articulation angles may be recorded, and a real swept area during the reverse movement may be determined partly based on the recorded articulation angles.

In addition, or alternatively, the method here further comprises a step of determining the current vehicle state by determining any one of vehicle linear speed, vehicle angular speed, vehicle linear acceleration, vehicle angular acceleration, wheel rotation speed, tyre acceleration, tyre normal load, slip angle, and steer angle. Hence, the vehicle state may optionally also determine a current vehicle motion state.

The vehicle motion state optionally also comprises any one of a longitudinal wheel slip of a respective wheel of the tyre, lateral wheel slip of the respective wheel of the tyre, a normal load of the respective wheel of the vehicle, an acceleration of the respective wheel of the vehicle, and a rotational velocity of the respective wheel of the vehicle.

Based on the above one or more vehicle motion states, the method comprises the step of further configuring the vehicle model. In other words, the method further defines the vehicle model using the outputs from the motion estimation model as inputs. The vehicle model may also contain data indicative of the applied torque on one or more wheels and use such data as control input to estimate the vehicle state.

Optionally, the method further comprises obtaining S24 a tyre model to predict a tyre wear in dependence of the current vehicle state. Hereby, the method comprises using the tyre model to reduce tyre wear during the operation of the vehicle combination. In this manner, a retake can be performed also if a reversal manoeuvre given the current vehicle initial state is expected to lead to a large tyre wear. By further applying a tyre model to the control of the vehicle combination during the manoeuvre, the method comprises an additional control restriction to the control of the vehicle combination so as to provide an even more valid manoeuvre along the route. As mentioned herein, the tyre model is parameterized by one or more tyre parameters obtained from input data related to at least one parameter of a tyre on any one of vehicle units of the vehicle combination. In this extended example of the method in Fig. 6B, the method generally further comprises obtaining the input data 561, 562 related to the at least one parameter of any one of the tyres 150, 160, 170 on the vehicle combination 100 from the one or more sensors 510 arranged to measure one or more operating parameters of the tyre.

The sensors are generally arranged in connection to the actual tyre and/or sensors arranged on the vehicle 100. These optional sensors 510 are arranged to measure one or more operating parameters of the tyre, where the one or more operating parameters comprise any of: vehicle speed, wheel rotation speed, tyre pressure, tyre temperature, tyre acceleration, tyre strain, tyre GPS position, weather, ambient temperature, rain classification data, amount of water on road, normal load, slip angle, steer angle, and applied positive/negative torque on one or more wheels.

The input data comprises data obtained from a memory 565 related to tyre design, wherein the data related to tyre design comprises any of: tyre nominal dimension, tyre structural characteristics, tyre chemical composition, and tyre history. The one or more tyre parameters comprise any of: tyre wear, tyre longitudinal stiffness, tyre lateral stiffness, tyre rolling resistance, tyre peak friction, tyre rolling radius, tyre contact patch properties, tyre balance properties and wheel alignment properties.

The method also comprises configuring the tyre model. The tyre model defines a relationship between tyre wear and vehicle motion state. The tyre model is parameterized by the one or more tyre parameters. That is, the tyre model is parameterized by one or more tyre parameters obtained from input data 561, 562 related to at least one parameter of a tyre 150, 160, 170 on the heavy-duty vehicle 100. As such, the tyre model is configured to predict a tyre wear in dependence of the vehicle state.

Thus, given a certain tyre model structure, the tyre model is first adjusted to fit a given tyre mounted to the vehicle, i.e., it is parameterized. It is appreciated that different tyres on a vehicle are likely to be associated with different tyre model parameterizations, even if the tyres fitted to the different wheels of the vehicle are of the same brand and type, they are likely to be subject to different operating conditions and will therefore likely have different tyre model parameterizations. The tyre model defines a relationship between current or future vehicle motion state and tyre wear. This means that the tyre model can be seen as a function or mapping between vehicle motion state and tyre wear.

The tyre model may also include additional aspects, as e.g. discussed above in connection to Figure 2. For instance, the tyre model may comprise just a linear approximation of the relationship between wheel slip and generated force determined from the slip stiffness parameter of the tyre. As mentioned above, one key concept of the techniques disclosed herein is that the tyre models and the different estimated and measured tyre parameters may be repeatedly updated based on updated input data. This means that the tyre models and various tyre parameters will be kept up to date as the tyre progresses through its life cycle, from a new tyre to a tyre which is almost worn out and in need of replacement. Consequently, the tyre model will be more accurate compared to a tyre model which is fixedly configured. Also, the tyre model will react to misconfiguration, and remove any discrepancy between pre-configured data and actual behaviour of the tyre.

According to some examples, the tyre model is configured to define a relationship between wheel slip and generated wheel force in longitudinal and lateral directions, as was discussed above in connection to Figure 2. The VMM function of the vehicle 100 may advantageously use this tyre model to perform MSD coordination in order to generate a desired global force distribution over the different vehicle units of a heavy-duty articulated vehicle in a more precise manner. For instance, in case an acceleration is desired, the VMM function may coordinate MSDs to generate wheel slips which together provide the desired force in the direction of the desired acceleration. The tyre model is optionally configured to define a relationship between wheel slip, tyre wear and both propulsion and braking wheel forces, or just one out of propulsion or braking.

Subsequently, as also mentioned in relation to Fig. 6A, the method in Fig. 6B comprises initiating S30 the reverse manoeuvre if the current vehicle state is comprised in the set of entry conditions.

In regard to the step of initiating S30 the reversal manoeuvre if the current vehicle state is comprised in the set of entry conditions, the method here comprises a step of determining S32 if the current vehicle state is within the set of entry conditions. By way of example, the method comprises determining if the current vehicle state is within the set of entry conditions by comparing the reversal manoeuvrer with the pre-determined nominal trajectory.

Moreover, the step of initiating S30 the reversal manoeuvre if the current vehicle state is comprised in the set of entry conditions here also comprises determining S34 if the current vehicle state is within the set of entry conditions by using vehicle geometry and route/map information.

In the method of Fig. 6B, the method subsequently comprises controlling S40 the reversal manoeuvre of the vehicle combination 100 on the basis of the obtained set of entry conditions. By way of example, the truck 110 is manoeuvred in the reverse direction 80 to be maintained within the first route boundaries 193 of the defined entry conditions while the trailer vehicle unit 120 is manoeuvred in the reverse direction 80 by the truck 110 to be maintained within the second route boundaries 194 of the defined entry conditions.

By way of example, the method comprises controlling the one or more motion support devices to support in the reversal manoeuvre of the vehicle combination along the route. In some examples, the step of controlling the one or more motion support devices to support in the reversal manoeuvre of the vehicle combination along the route may include additional operational actions. Non-excluding examples are e.g. the step of obtaining route information. Route information may generally be obtained from the navigational system of the vehicle, as is commonly known in the art. Hence, the vehicle 100 here comprises a navigational system in communication with the control unit 130, or any one of the other control units of the vehicle.

In addition, or alternatively, the method may comprise controlling S40 the reversal manoeuvre of the vehicle combination 100 on the basis of a predetermined threshold value.

The threshold value is e.g. the predetermined vehicle position of the needed position of the trailer vehicle unit 120 for ensuring that the trailer vehicle unit 120 can arrive at the target pose without exceeding the entry conditions, such as the second boundaries 194.

It is to be noted that the method generally here comprises a step of continuously determining S42 if the current vehicle state is within the set of entry conditions. By way of example, the method comprises determining if the current vehicle state is within the set of entry conditions by comparing the reversal manoeuvrer with the pre-determined nominal trajectory.

Moreover, the method may also control the reversal manoeuvre by using S44 vehicle geometry and route/map information so as to continuously verify that the vehicle state is within the set of entry conditions.

During the reversal manoeuvre, the pose of the vehicle may deviate from the entry condition. If the current vehicle state deviates from its trajectory with a threshold value, the method generally determines an adjusted manoeuvre for the vehicle. Thus, in Fig. 6B, the method optionally comprises a step of determining S50 an adjusted manoeuvre of the vehicle combination in an essentially opposite direction to the reverse direction 80, and further controlling S52 the vehicle combination to switch from the reversal manoeuvre to the adjusted manoeuvre. In this example, the essentially opposite direction is the forward driving direction. Further details in regard to step S50 and S52 are described in relation to Fig. 6C.

Figure 6C is a flow chart illustrating another example of a method for controlling the vehicle combination 100 during the reversal manoeuvre.

Accordingly, as also mentioned in view of Figs. 6A and 6B, the method comprises the steps obtaining S10 the set of entry conditions indicating allowable vehicle states prior to commencing the manoeuvre, determining S20 the current vehicle state, and initiating S30 the manoeuvre if the current vehicle state is comprised in the set of entry conditions.

In addition, the method in Fig. 6C comprises the step of monitoring S42 the vehicle state during the reversal manoeuvre. If the monitored vehicle state deviates from the entry conditions, such as the entry conditions 193, 194, the method here further comprises determining S50 an adjusted manoeuvre of the vehicle combination in an essentially opposite direction to the reverse direction 80, and further controlling S52 the vehicle combination to switch from the reversal manoeuvre to the adjusted manoeuvre. In this example, the essentially opposite direction is the forward driving direction.

By way of example, the adjusted manoeuvre in the forward direction 60 to the reverse direction 80 is determined on the basis of the determined target pose of the articulated vehicle combination.

It is to be noted that the method generally here comprises a step of continuously determining S52 if the current vehicle state is within the set of entry conditions. By way of example, the method comprises determining if the current vehicle state is within the set of entry conditions by comparing the reversal manoeuvrer with the pre-determined nominal trajectory.

In another example, the method further comprises controlling S52 the vehicle combination to switch from the reversal manoeuvre to the adjusted manoeuvre, if the current vehicle state deviates from the entry conditions by comparing the deviation with a threshold value, i.e. comparing the determined current vehicle state with a threshold indicative of a predetermined vehicle position of a needed position of the trailer vehicle unit for ensuring arriving at the target pose without exceeding the entry conditions, such as the second boundaries 194.

Moreover, the method may also control the switch from the reverse direction 80 to the forward direction 60 by using S54 vehicle geometry and route/map information so as to continuously verify that the vehicle state of the vehicle combination is within the set of entry conditions.

In another example, the method comprises monitoring S42 the vehicle state during the manoeuvre and predicting S51 a probability of reaching the target pose 190 on the basis of the route boundaries. If the predicted probability of reaching the target pose 190 is below a threshold value, the method here further comprises determining an adjusted manoeuvre, and controlling the vehicle to switch from the manoeuvre to the determined adjusted manoeuvre.

In a subsequent step, the method further comprises controlling S60 the articulated vehicle combination in the essentially forward direction 60 on the basis of the target pose 190 of the articulated vehicle combination. By way of example, the method comprising controlling the vehicle combination in the forward direction 60 to the reverse direction 80 until a current state of the vehicle combination is again comprised in the set of entry conditions.

As such, the method comprises controlling the vehicle combination 100 to perform a forward driving as long as the entry conditions are not fulfilled.

Optionally, the method further comprises a step of determining S63 a time period for performing the operation in the forward direction 60 until the current state of the vehicle combination is again comprised in the set of entry conditions.

Typically, the method may further comprise controlling the vehicle combination in the forward direction 60 until the current state of the vehicle combination exceeds a route position threshold value indicative of a route position of the vehicle combination permitting the vehicle combination to restart a new reversal manoeuvre.

Also, as mentioned above, the method here further controls the forward manoeuvre by using S64 vehicle geometry and route/map information so as to continuously verify that the vehicle state is within the set of entry conditions.

The method also optionally comprises coordinating one or more motion support devices of the heavy-duty vehicle 100 to operate and control the vehicle combination during the reverse manoeuvre under constraints comprising fulfilment of a motion request.

It is appreciated that the methods steps discussed above in connection to Figures 6A-C can be freely combined. By way of example, the step of determining S50 an adjusted manoeuvre of the vehicle combination in forward direction 60, and further controlling S52 the vehicle combination to switch from the reversal manoeuvre to the adjusted manoeuvre can be implemented also in the methods described in relation to Figs. 6A and 6B.

Figure 7 schematically illustrates, in terms of a number of functional units, the components of a control unit 700 according to embodiments of the discussions herein, such as any of the VCUs 130, 140. This control unit 700 may be comprised in the articulated vehicle 100. Processing circuitry 710 is provided using any combination of one or more of a suitable central processing unit CPU, multiprocessor, microcontroller, digital signal processor DSP, etc., capable of executing software instructions stored in a computer program product, e.g. in the form of a storage medium 730. The processing circuitry 710 may further be provided as at least one application specific integrated circuit ASIC, or field programmable gate array FPGA.

Particularly, the processing circuitry 710 is configured to cause the control unit 700 to perform a set of operations, or steps, such as the methods discussed in connection to Figures 6A to 6C. For example, the storage medium 730 may store the set of operations, and the processing circuitry 710 may be configured to retrieve the set of operations from the storage medium 730 to cause the control unit 700 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 700 may further comprise an interface 720 for communications with at least one external device. As such the interface 720 may comprise one or more transmitters and receivers, comprising analogue and digital components and a suitable number of ports for wireline or wireless communication.

The processing circuitry 710 controls the general operation of the control unit 700, e.g., by sending data and control signals to the interface 720 and the storage medium 730, by receiving data and reports from the interface 720, and by retrieving data and instructions from the storage medium 730. Other components, as well as the related functionality, of the control node are omitted in order not to obscure the concepts presented herein.

Figure 8 illustrates a computer readable medium 810 carrying a computer program comprising program code means 820 for performing the methods illustrated in Figures 6A-C, when said program product is run on a computer. The computer readable medium and the code means may together form a computer program product 800.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. For example, the generalization of the present vehicle combinations to include additional vehicles, as described above, remains within the scope of the present invention. The method may be implemented for controlling a number of different vehicles, such as a single vehicle, a single vehicle unit, a vehicle combination of a plurality of vehicle units etc. and also for single vehicle units. The method may be particularly useful for vehicle combinations, e.g. articulated vehicle combinations. However, even some types of single vehicle units may be subjected to disturbances during a manoeuvre so that the control of the vehicle may be difficult to manage within the borders of a road with limited space and defined borders.

By way of example, a single vehicle unit in the form of a typical truck may only steer with the front axle. In this type of vehicle unit, the same challenge of performing control during the manoeuvre may occur where there is a need to move the front part of the truck more than the rear part of the truck in order to correct the vehicle position within the location borders, e.g. when the rear axle of the truck is close to the borders and the intended manoeuvre cannot be further followed without having the rear part of the vehicle to cross the borders. Accordingly, it is understood that the vehicle may be of a variety of types and also a vehicle combination including various vehicle units. One vehicle unit may be a vehicle in the form of a towing vehicle, e.g. a truck arranged to tow a full trailer, or a tractor for a semitrailer. The vehicle combination may include one or more towed vehicle units. The vehicle units may be interconnected one after the other via the at least one articulated joint.

Also, although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A method (900) for controlling a vehicle in preparation for a manoeuvre along a first main route direction, said method comprising:

    - obtaining (S10) a set of entry conditions indicating allowable vehicle states prior to commencing the manoeuvre, wherein obtaining (S10) a set of entry conditions indicating allowable vehicle states prior to commencing the manoeuvre comprises receiving data indicative of route boundaries and data indicative of a target pose of at least a part of the vehicle within the route boundaries,
    - determining (S20) a current vehicle state, and
    - initiating (S30) the manoeuvre if the current vehicle state is comprised in the set of entry conditions, **characterized in that** the method comprises:
    - predicting (S41) a probability of reaching the target pose on the basis of the route boundaries,
    - if the predicted probability of reaching the target pose is below a threshold value, determining (S50) an adjusted manoeuvre of the vehicle in an essentially opposite direction to the first main route direction, and

        - controlling (S52) the vehicle to switch from the manoeuvre to the determined adjusted manoeuvre.

2. The method according to claim 1, wherein obtaining (S10) a set of entry conditions indicating allowable vehicle states prior to commencing the manoeuvre comprising obtaining a vehicle model of the vehicle.

3. The method according to any one of the preceding claims, wherein said data indicative of the route boundaries is obtained from route information, and/or wherein said data indicative of the target pose of at least a part of the vehicle within the route boundaries is obtained from a transportation mission for the vehicle.

4. The method according to any one of the preceding claims, wherein obtaining (S10) a set of entry conditions indicating allowable vehicle states prior to commencing the manoeuvre comprises obtaining environmental variables.

5. The method according to any one of the preceding claims, further comprising controlling (S40) the manoeuvre of the vehicle on the basis of the obtained set of entry conditions.

6. The method according to any one of the preceding claims, further comprising monitoring the vehicle state during the manoeuvre, and if the monitored vehicle state deviates from the entry conditions, said method further comprising determining (S50) an adjusted manoeuvre of the vehicle in an essentially opposite direction to the first main route direction, and further controlling (S52) the vehicle to switch from the manoeuvre to the determined adjusted manoeuvre.

7. The method according to claim 6, further comprising controlling (S52) the vehicle in the essentially opposite direction to the first main route direction on the basis of the target pose of the vehicle.

8. The method according to any one of the preceding claims 6 to 7, further comprising controlling the vehicle to switch from the manoeuvre to the determined adjusted manoeuvre, if the current vehicle state deviates from the entry conditions by comparing the deviation with a threshold value.

9. The method according to any one of the preceding claims, further comprising controlling the vehicle in the essentially opposite direction to the first main route direction until the current state of the vehicle is again comprised in the set of entry conditions, and/or, further comprising determining a time period for performing the operation in the essentially opposite direction until the current state of the vehicle is again comprised in the set of entry conditions, and/or, further comprising controlling the vehicle in the essentially opposite direction until the current state of the vehicle exceeds a threshold value indicative of a route position of the vehicle permitting the vehicle to restart a new manoeuvre along the first main route direction.

10. The method according to any one of the preceding claims, wherein the manoeuvre is a reverse manoeuvre and the first main route direction is a reverse driving route direction, and/or, wherein the essentially opposite direction is a forward driving direction.

11. The method according to any one of the preceding claims, further comprising determining if the current vehicle state is within the set of entry conditions.

12. The method according to any one of the preceding claims, further comprising using the set of entry conditions during the manoeuvre so as to monitor the vehicle state.

13. The method according to any one of the preceding claims, further comprising obtaining a tyre model to predict a tyre wear in dependence of the current vehicle state.

14. A computer program (820) comprising program code means for performing the method of any of claims 1-13 when said program is run on a computer or on processing circuitry (810) of a control unit (700).

15. A computer readable medium (810) carrying a computer program (820) comprising program code means for performing the method of any of claims 1-13 when said program product is run on a computer or on processing circuitry (810) of a control unit (700).

16. A control unit (130, 140, 700) for controlling a vehicle in preparation for a manoeuvre along a first main route direction, the control unit being configured to perform the steps of the method according to any one of claims 1-13, wherein the control unit is configured to: obtain a set of entry conditions indicating allowable vehicle states prior to commencing the manoeuvre by receiving data indicative of route boundaries and data indicative of a target pose of at least a part of the vehicle within the route boundaries; determine a current vehicle state; initiate the manoeuvre if the current vehicle state is comprised in the set of entry conditions; predict a probability of reaching the target pose on the basis of the route boundaries; wherein, if the predicted probability of reaching the target pose is below a threshold value, determine an adjusted manoeuvre of the vehicle in an essentially opposite direction to the first main route direction; and control the vehicle to switch from the manoeuvre to the determined adjusted manoeuvre.

17. A vehicle (100) comprising a control unit (800) according to claim 16.

## Patentansprüche

1. Verfahren (900) zum Steuern eines Fahrzeugs in Vorbereitung auf ein Manöver entlang einer ersten Hauptstreckenrichtung, wobei das Verfahren Folgendes umfasst:

   - Erhalten (S10) eines Satzes von Zulassungsbedingungen, die zulässige Fahrzeugzustände vor dem Beginn des Manövers angeben, wobei das Erhalten (S10) eines Satzes von Zulassungsbedingungen, die zulässige Fahrzeugzustände vor dem Beginn des Manövers angeben, das Empfangen von Daten, die Streckenbegrenzungen angeben, und Daten, die eine Zielstellung mindestens eines Teils des Fahrzeugs innerhalb der Streckenbegrenzungen angeben, umfasst,
   - Bestimmen (S20) eines aktuellen Fahrzeugzustands, und
   - Einleiten (S30) des Manövers, wenn der aktuelle Fahrzeugzustand im Satz von Zulassungsbedingungen enthalten ist, **dadurch gekennzeichnet, dass** das Verfahren Folgendes umfasst:

   - Vorhersagen (S41) einer Wahrscheinlichkeit des Erreichens der Zielstellung auf Basis der Streckenbegrenzungen,
   - wenn die vorhergesagte Wahrscheinlichkeit des Erreichens der Zielstellung unterhalb eines Schwellenwerts liegt, Bestimmen (S50) eines angepassten Manövers des Fahrzeugs in einer im Wesentlichen entgegengesetzten Richtung zur ersten Hauptstreckenrichtung, und
   - Steuern (S52) des Fahrzeugs, um vom Manöver zum bestimmten angepassten Manöver zu wechseln.

2. Verfahren nach Anspruch 1, wobei das Erhalten (S10) eines Satzes von Zulassungsbedingungen, die zulässige Fahrzeugzustände vor dem Beginn des Manövers angeben, das Erhalten eines Fahrzeugmodells des Fahrzeugs umfasst.

3. Verfahren nach einem der vorhergehenden Ansprüche, wobei die Daten, die die Streckenbegrenzungen angeben, von Streckeninformationen erhalten werden, und/oder wobei die Daten, die die Zielstellung mindestens eines Teils des Fahrzeugs innerhalb der Streckenbegrenzungen angeben, von einem Beförderungsauftrag für das Fahrzeug erhalten werden.

4. Verfahren nach einem der vorhergehenden Ansprüche, wobei das Erhalten (S10) eines Satzes von Zulassungsbedingungen, die zulässige Fahrzeugzustände vor dem Beginn des Manövers angeben, das Erhalten von Umgebungsvariablen umfasst.

5. Verfahren nach einem der vorhergehenden Ansprüche, ferner umfassend das Steuern (S40) des Manövers des Fahrzeugs auf Basis des erhaltenen Satzes von Zulassungsbedingungen.

6. Verfahren nach einem der vorhergehenden Ansprüche, ferner umfassend das Überwachen des Fahrzeugzustands während des Manövers, und wobei, wenn der überwachte Fahrzeugzustand von den Zulassungsbedingungen abweicht, das Verfahren ferner das Bestimmen (S50) eines angepassten Manövers des Fahrzeugs in einer im Wesentlichen entgegengesetzten Richtung zur ersten Hauptstreckenrichtung und ferner das Steuern (S52) des Fahrzeugs, um vom Manöver zum bestimmten angepassten Manöver zu wechseln, umfasst.

7. Verfahren nach Anspruch 6, ferner umfassend das Steuern (S52) des Fahrzeugs in einer im Wesentlichen entgegengesetzten Richtung zur ersten Hauptstreckenrichtung auf Basis der Zielstellung des Fahrzeugs.

8. Verfahren nach einem der vorhergehenden Ansprüche 6 bis 7, ferner umfassend das Steuern des Fahrzeugs, um vom Manöver zum bestimmten angepassten Manöver zu wechseln, wenn der aktuelle Fahrzeugzustand von den Zulassungsbedingungen abweicht, indem die Abweichung mit einem Schwellenwert verglichen wird.

9. Verfahren nach einem der vorhergehenden Ansprüche, ferner umfassend das Steuern des Fahrzeugs in einer im Wesentlichen entgegengesetzten Richtung zur ersten Hauptstreckenrichtung, bis der aktuelle Zustand des Fahrzeugs wieder im Satz von Zulassungsbedingungen enthalten ist, und/oder ferner umfassend das Bestimmen eines Zeitraums zum Durchführen des Vorgangs in der im Wesentlichen entgegengesetzten Richtung, die der aktuelle Zustand des Fahrzeugs wieder im Satz von Zulassungsbedingungen enthalten ist, und/oder ferner umfassend das Steuern des Fahrzeugs in der im Wesentlichen entgegengesetzten Richtung, bis der aktuelle Zustand des Fahrzeugs einen Schwellenwert übersteigt, der eine Streckenposition des Fahrzeugs angibt, die es dem Fahrzeug ermöglicht, ein neues Manöver entlang der ersten Hauptstreckenrichtung neu zu beginnen.

10. Verfahren nach einem der vorhergehenden Ansprüche, wobei das Manöver ein Rückwärtsmanöver ist und die erste Hauptstreckenrichtung eine Rückwärtsfahrt-Streckenrichtung ist und/oder wobei die im Wesentlichen entgegengesetzte Richtung eine Vorwärtsfahrtrichtung ist.

11. Verfahren nach einem der vorhergehenden Ansprüche, ferner umfassend das Bestimmen, ob sich der aktuelle Fahrzeugzustand innerhalb des Satzes von Zulassungsbedingungen befindet.

12. Verfahren nach einem der vorhergehenden Ansprüche, ferner umfassend das Verwenden des Satzes von Zulassungsbedingungen während des Manövers, um den Fahrzeugzustand zu überwachen.

13. Verfahren nach einem der vorhergehenden Ansprüche, ferner umfassend das Erhalten eines Reifenmodells, um eine Reifenabnutzung in Abhängigkeit von dem aktuellen Fahrzeugzustand vorherzusagen.

14. Computerprogramm (820), das Programmcodemittel zum Durchführen des Verfahrens nach einem der Ansprüche 1-13 umfasst, wenn das Programm auf einem Computer oder auf einem Verarbeitungsschaltkreis (810) einer Steuereinheit (700) ausgeführt wird.

15. Computerlesbares Medium (810), das ein Computerprogramm (820) aufweist, das Programmcodemittel zum Durchführen des Verfahrens nach einem der Ansprüche 1-13 umfasst, wenn das Programmprodukt auf einem Computer oder auf einem Verarbeitungsschaltkreis (810) einer Steuereinheit (700) ausgeführt wird.

16. Steuereinheit (130, 140, 700) zum Steuern eines Fahrzeugs in Vorbereitung auf ein Manöver entlang einer ersten Hauptstreckenrichtung, wobei die Steuereinheit dazu konfiguriert ist, die Schritte des Verfahrens nach einem der Ansprüche 1-13 durchzuführen, wobei die Steuereinheit für Folgendes konfiguriert ist: Erhalten eines Satzes von Zulassungsbedingungen, die zulässige Fahrzeugzustände vor dem Beginn des Manövers angeben, indem Daten, die Streckenbegrenzungen angeben, und Daten, die eine Zielstellung mindestens eines Teils des Fahrzeugs innerhalb der Streckenbegrenzungen angeben, empfangen werden; Bestimmen eines aktuellen Fahrzeugzustands; Einleiten des Manövers, wenn der aktuelle Fahrzeugzustand im Satz von Zulassungsbedingungen enthalten ist; Vorhersagen einer Wahrscheinlichkeit des Erreichens der Zielstellung auf Basis der Streckenbegrenzungen; wobei, wenn die vorhergesagte Wahrscheinlichkeit des Erreichens der Zielstellung unterhalb eines Schwellenwerts liegt, ein angepasstes Manöver des Fahrzeugs in einer im Wesentlichen entgegengesetzten Richtung zur ersten Hauptstreckenrichtung bestimmt wird; und Steuern des Fahrzeugs, um vom Manöver zum bestimmten angepassten Manöver zu wechseln.

17. Fahrzeug (100), das eine Steuereinheit (800) nach Anspruch 16 umfasst.

**Revendications**

1. Procédé (900) de commande d'un véhicule en préparation d'une manœuvre le long d'une première direction d'itinéraire principal, ledit procédé comprenant :

   - l'obtention (S10) d'un ensemble de conditions d'entrée indiquant les états admissibles du véhicule avant le début de la manœuvre, l'obtention (S10) d'un ensemble de conditions d'entrée indiquant les états admissibles du véhicule avant le début de la manœuvre comprenant la réception de données indiquant les limites de l'itinéraire et de données indiquant une position cible d'au moins une partie du véhicule à l'intérieur des limites de l'itinéraire,
   - la détermination (S20) d'un état actuel du véhicule, et
   - le déclenchement (S30) de la manœuvre si l'état actuel du véhicule est compris dans l'ensemble des conditions d'entrée, **caractérisé en ce que** le procédé comprend :

      - la prédiction (S41) d'une probabilité d'atteindre la position cible sur la base des limites de l'itinéraire,
      - si la probabilité prévue d'atteindre la position cible est inférieure à une valeur seuil, la détermination (S50) d'une manœuvre ajustée du véhicule dans une direction sensiblement opposée à la première direction d'itinéraire principal, et
      - la commande (S52) du passage du véhicule de la manœuvre à la manœuvre ajustée déterminée.

2. Procédé selon la revendication 1, dans lequel l'obtention (S10) d'un ensemble de conditions d'entrée indiquant des états de véhicule admissibles avant de commencer la manœuvre comprend l'obtention d'un modèle de véhicule du véhicule.

3. Procédé selon l'une quelconque des revendications précédentes, dans lequel lesdites données indicatives des limites d'itinéraire sont obtenues à partir d'informations d'itinéraire, et/ou dans lequel lesdites données indicatives de la position cible d'au moins une partie du véhicule à l'intérieur des limites d'itinéraire sont obtenues à partir d'une mission de transport pour le véhicule.

4. Procédé selon l'une quelconque des revendications précédentes, dans lequel l'obtention (S10) d'un ensemble de conditions d'entrée indiquant des états admissibles du véhicule avant de commencer la manœuvre comprend l'obtention de variables environnementales.

5. Procédé selon l'une quelconque des revendications précédentes, comprenant en outre la commande (S40) de la manœuvre du véhicule sur la base de l'ensemble obtenu de conditions d'entrée.

6. Procédé selon l'une quelconque des revendications précédentes, comprenant en outre la surveillance de l'état du véhicule pendant la manœuvre et, si l'état surveillé du véhicule s'écarte des conditions d'entrée, ledit procédé comprenant en outre la détermination (S50) d'une manœuvre ajustée du véhicule dans une direction essentiellement opposée à la première direction d'itinéraire principal, et en outre la commande (S52) du véhicule pour passer de la manœuvre à la manœuvre ajustée déterminée.

7. Procédé selon la revendication 6, comprenant en outre la commande (S52) du véhicule dans la direction essentiellement opposée à la première direction d'itinéraire principal sur la base de la position cible du véhicule.

8. Procédé selon l'une quelconque des revendications précédentes 6 à 7, comprenant en outre la commande du véhicule pour passer de la manœuvre à la manœuvre ajustée déterminée, si l'état actuel du véhicule s'écarte des conditions d'entrée en comparant l'écart à une valeur seuil.

9. Procédé selon l'une quelconque des revendications précédentes, comprenant en outre la commande du véhicule dans la direction essentiellement opposée à la première direction d'itinéraire principal jusqu'à ce que l'état actuel du véhicule soit à nouveau compris dans l'ensemble de conditions d'entrée, et/ou comprenant en outre la détermination d'un laps de temps pour effectuer l'opération dans la direction essentiellement opposée jusqu'à ce que l'état actuel du véhicule soit à nouveau compris dans l'ensemble de conditions d'entrée, et/ou comprenant en outre la commande du véhicule dans la direction sensiblement opposée jusqu'à ce que l'état actuel du véhicule dépasse une valeur seuil indiquant une position d'itinéraire du véhicule permettant au véhicule de recommencer une nouvelle manœuvre le long de la première direction d'itinéraire principal.

10. Procédé selon l'une quelconque des revendications précédentes, dans lequel la manœuvre est une manœuvre en marche arrière et la première direction d'itinéraire principal est une direction d'itinéraire en marche arrière, et/ou la direction essentiellement opposée est une direction en marche avant.

11. Procédé selon l'une quelconque des revendications précédentes, comprenant en outre l'étape consistant à déterminer si l'état actuel du véhicule est compris dans l'ensemble de conditions d'entrée.

12. Procédé selon l'une quelconque des revendications précédentes, comprenant en outre l'utilisation de l'ensemble de conditions d'entrée pendant la manœuvre de manière à surveiller l'état du véhicule.

13. Procédé selon l'une quelconque des revendications précédentes, comprenant en outre l'obtention d'un modèle de pneu pour prédire une usure de pneu en fonction de l'état actuel du véhicule.

14. Programme informatique (820) comprenant un moyen de code de programme pour exécuter le procédé selon l'une quelconque des revendications 1 à 13 lorsque ledit programme est exécuté sur un ordinateur ou sur un circuit de traitement (810) d'une unité de commande (700).

15. Support lisible par ordinateur (810) comportant un programme informatique (820) comprenant un moyen de code de programme pour exécuter le procédé selon l'une quelconque des revendications 1 à 13 lorsque ledit produit de programme est exécuté sur un ordinateur ou sur un circuit de traitement (810) d'une unité de commande (700).

16. Unité de commande (130, 140, 700) pour commander un véhicule en préparation d'une manœuvre le long d'une première direction d'itinéraire principal, l'unité de commande étant configurée pour exécuter les étapes du procédé selon l'une quelconque des revendications 1 à 13, l'unité de commande étant configurée pour : obtenir un ensemble de conditions d'entrée indiquant les états admissibles du véhicule avant de commencer la manœuvre en recevant des données indiquant les limites de l'itinéraire et des données indiquant une position cible d'au moins une partie du véhicule à l'intérieur des limites de l'itinéraire ; déterminer l'état actuel du véhicule ; lancer la manœuvre si l'état actuel du véhicule est compris dans l'ensemble des conditions d'entrée ; prévoir une probabilité d'atteindre la position cible sur la base des limites de l'itinéraire ; si la probabilité prévue d'atteindre la position cible est inférieure à une valeur seuil, déterminer une manœuvre ajustée du véhicule dans une direction sensiblement opposée à la première direction d'itinéraire principal ; et commander le véhicule pour passer de la manœuvre à la manœuvre ajustée déterminée.

17. Véhicule (100) comprenant une unité de commande (800) selon la revendication 16.

EP 4 457 130 B1

FIG. 1A

FIG. 1B

26

FIG. 1C

$$F_x \leq \mu F_z$$

FIG. 2

300

TSM
370

Wheel
speed
350

$F_x$

$F_y$

$V_x$

$V_y$

MSD
CNTRL
340

VMM
360

330

$W_x$

R

PROP
310

TYRE MODEL
380

320

FIG. 3

400

CLOUD

410

430

420

VEHICLE ENVIRONMENT

TRANSPORT MISSION AND ROUTE PLANNING

440

HUMAN MACHINE INTERFACE

370

TRAFFIC SITUATION MANAGEMENT (TSM)

360

VEHICLE MOTION AND POWER MANAGEMENT (VMM)

340

MOTION SUPPORT DEVICE (MSD) MANAGEMENT

FIG. 4

500

TSM
370

$a_{req}$   $c_{req}$

VMM
360

160, 170, 180

$V_1$   $V_2$

$Fy_1$   $Fy_2$
$Fx_1$   $Fx_2$
$Mz_1$   $Mz_2$

$\omega_x$

$F_y$

$F_x$   $F_z$

SENSORS 510

VISION   WHEEL

RADAR   LIDAR   GPS

550

OPTIMIZATION

380

MOTION ESTIMATION   **s**   GLOB FORCE GENERATION   **V**   MSD COORDINATION   TYRE MODEL

520   530   540

$\lambda_i / \omega_i / T_i / \delta_i$

560

sensor data - 561   TYPRESSW   tyre parameters

565   tyre data - 562

capability report   capability report   capability report

$\lambda_i/\omega_i/T_i$   $\lambda_i/\omega_i/T_i$   $\lambda_i/\delta_i$

MSDs
340

BRAKES   PROPULSION   STEERING etc.

FIG. 5

900

| S10 |

↓

| S20 |

↓

S30
| S32 |

↓

S40
| S42 | | S44 |

FIG. 6A

900

S10
| S12 | | S14 | | S16 |

↓

S20
| S22 | | S24 |

↓

S30
| S32 | | S34 |

↓

S40
| S42 | | S44 |

↓

S50
| S52 |

FIG. 6B

900

S10
S12    S14    S16

S20
S22    S24

S30
S32    S34

S40
S42    S44

S50
S51    S52    S54

S60
S63    S64

FIG. 6C

130, 140, 700

710    720

730

FIG. 7

800

810

820

FIG. 8

**EP 4 457 130 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017036526 A1

- WO 2020021126 A1

### Non-patent literature cited in the description

- **HANS PACEJKA**. Tyre and vehicle dynamics. Elsevier Ltd., 2012

- **HANS PACEJKA**. Tyre and vehicle dynamics. Elsevier Ltd, 2012